# EUROPÄISCHE PATENTSCHRIFT

(11) **EP 3 318 769 B1**
(45) Veröffentlichungstag und Bekanntmachung des Hinweises auf die Patenterteilung: **05.01.2022**
(21) Anmeldenummer: 17198213.5
(22) Anmeldetag: 25.10.2017
(51) Int. Cl.: F15B 19/00, F15B 21/00, F15B 13/08, F15B 20/00, F15B 13/00

(54) **ELEKTROPNEUMATISCHER STELLUNGSREGLER UND FELDGERÄT MIT EINEM ELETROPNEUMATISCHEN STELLUNGSREGLER**
ELECTROPNEUMATIC POSITION CONTROLLER AND FIELD DEVICE WITH AN ELETROPNEUMATIC POSITION CONTROLLER
RÉGULATEUR DE POSITION ÉLECTROPNEUMATIQUE ET APPAREIL DE TERRAIN DOTÉ D'UN RÉGULATEUR DE POSITION ÉLETROPNEUMATIQUE

(30) Priorität: 26.10.2016 DE 202016106017 U
(43) Veröffentlichungstag der Anmeldung: 09.05.2018
(73) Patentinhaber: Samson Aktiengesellschaft, 60314 Frankfurt am Main (DE)
(72) Erfinder: Valentin-Rumpel, Frank, 64823 Groß-Umstadt (DE)
(74) Vertreter: Schmid, Nils T.F.

(56) Entgegenhaltungen:
- EP-A2- 0 072 753
- DE-A1- 10 316 129
- DE-A1- 19 537 482
- DE-B3-102012 021 387
- DE-B3-102014 013 098
- DE-U1- 20 301 251

## Beschreibung

Die Erfindung betrifft einen elektropneumatischen Stellungsregler für einen pneumatischen Stellantrieb zum Betätigen einer Stellarmatur, wie ein Stellventil, einer prozesstechnischen Anlage, beispielsweise einer chemischen Anlage, wie einer petrochemischen Anlage, lebensmittelverarbeitenden Anlage, wie einer Brauerei, einem Kraftwerk oder dergleichen. Die Erfindung betrifft auch ein elektropneumatisches Feldgerät mit einem elektropneumatischen Stellungsregler und einem einfach- oder doppelt-wirkenden pneumatischen Stellantrieb zum Betätigen einer Stellarmatur, wie ein Stellventil, einer prozesstechnischen Anlage.

Von DE 10 2012 021 387 B3 ist ein gattungsgemäßer Elektropneumatischer Stellungsregler zum Steuern eines pneumatischen Stellantriebs einer prozesstechnischen Anlage bekannt. Der Stellungsregler ist über ein pneumatisches Leitungssystem an dem pneumatischen Stellantrieb angeschlossen. Innerhalb eines Gehäuses des Stellungsreglers sind elektrische Leitungen, pneumatische Verbindungsleitungen sowie ein Mikroprozessor untergebracht. Der Mikroprozessor empfängt über einen Eingang an dem Gehäuse des Stellungsreglers ein Soll-Stell-Signal von einer Leitstelle der prozesstechnischen Anlage. Der Mikroprozessor ist verbunden mit vier im Wesentlichen gleich aufgebaut und von außen frei zugänglichen Steck- oder Einschubplätzen, die optional mit vier einzelnen Elektronik- und/oder Pneumatikkomponenten unterschiedlichster Bauart belegbar sind. Die Steckplätze sind derart modular angepasst, dass sie, je nachdem welche vorbestimmte elektronische Komponente eingesetzt ist, die Funktion der jeweiligen Elektronik- und/oder Pneumatikkomponente durch Herstellung von Elektronik- und/oder Pneumatik-Kommunikationsleitungen gewährleistet. Die Steckplätze besitzen pneumatische Eingangsschnittstellen, die über eine innerhalb des Gehäuses verlaufende Versorgungsleitung parallel durch den pneumatischen Feldeingang von einer pneumatischen Versorgungsquelle mit Druckluft versorgt sind. Ferner umfassen die Steckplätze elektrische Schnittstellen, die über elektrische Leitungen jeweils mit einem Mikroprozessor verbunden sind. Jeder Steckplatz hat eine Ausgangsschnittstelle, über die Ausgangssignale entweder elektrischer Natur oder pneumatischen Natur an einem jeweiligen Feldgerätausgang abgegeben werden können. Basierend auf dem vom Mikroprozessor empfangenen Soll-Stell-Signal transferiert dieser elektrische Signale an einen I/P-Wandler, der ein pneumatisches Ausgangssignal über den zugeordneten Feldausgang an einen pneumatischen Stellantrieb weiterleitet. In einem Steckplatz des Feldgerätes kann beispielsweise eine elektrische Ausgangstufe eingesetzt sein, um ein externes, außerhalb des Feldgerätgehäuses angeordnetes Magnetventil elektrisch anzusteuern, beispielsweise um eine Zwangsentlüftung zu bewirken. Gegenüber bekannten Stellungsregler ohne modularen Steckplatz ist es dank dem oben beschriebenen Stellungsregler möglich, den wirtschaftlichen Aufwand für den Betreiber prozesstechnischer Anlage funktionalen Einstellung und Auslegung elektropneumatischer Feldgeräte deutlich zu verringern. Es hat sich allerdings gezeigt, dass bei einigen, insbesondere sicherheitskritischen, Stellungsregler-Anwendungen weiterhin ein relativ hoher Konfigurationsaufwand bei der funktionalen Einstellung und Auslegung des elektropneumatischen Feldgeräts erforderlich ist. Es ist eine Aufgabe der Erfindung, den bekannten elektropneumatischen Stellungsregler dahingehend zu verbessern, dass der wirtschaftliche Aufwand für den Betreiber der prozesstechnischen Anlage bei der funktionalen Einstellung und Auslegung elektropneumatischer Stellungsreglers insbesondere für sicherheitskritische Anwendungen weiter verringert wird. Diese Aufgabe wird gelöst durch einen elektropneumatischen Stellungsregler mit den Merkmalen von Anspruch 1 und ein elektropneumatisches Feldgerät mit den Merkmalen von Anspruch 14.

Danach ist ein Elektropneumatischer Stellungsregler für einen pneumatischen Stellantrieb zum Betätigen einer Stellarmatur, wie ein Stellventil, einer prozesstechnischen Anlage, beispielsweise einer chemischen Anlage, wie einer petrochemischen Anlage, einem Kraftwerk, einer lebensmittelverarbeitenden Anlage, wie einer Brauerei oder dergleichen, vorgesehen. Der erfindungsgemäße elektropneumatische Stellungsregler umfasst wenigstens zwei modulare Pneumatiksteckplätze zur Belegung mit jeweils einer modularen Pneumatikkomponente, wie ein elektropneumatischer Wandler oder dergleichen, wobei die wenigstens zwei Pneumatiksteckplätze und die Pneumatikkomponenten derart modular aufeinander abgestimmt sind, dass deren pneumatische Schnittstellen bei Belegung eines Pneumatiksteckplatzes, vorzugsweise funktions- und betriebssicher ineinander übergehen. In der belegten Position im Steckplatz liegen sich die pneumatischen Schnittstellen der eingesetzten Pneumatikkomponente sowie die pneumatischen Schnittstellen des Pneumatiksteckplatzes diametral gegenüber, sodass eine pneumatische, vorzugsweise druckverlustlose Kopplung hergestellt ist. Ein modularer Pneumatiksteckplatz dient zur Aufnahme einer singulären modularen Pneumatikkomponente. Der modulare Pneumatiksteckplatzes ist insbesondere von einer Außenseite des Stellungsreglers einfach zugänglich. Eine modulare Pneumatikkomponente kann frei von elektrischen Ein- und/oder Ausgängen sein. Insbesondere kann eine modulare Pneumatikkomponente frei jeglicher Elektronik gebildet sein (Reinpneumatikkomponente).

Optional kann eine modulare Pneumatikkomponente eine Elektronik umfassen, beispielsweise einen elektropneumatischen Wandler, wie einen Strom-Druckwandler oder dergleichen. Eine Pneumatikkomponente mit Elektronikbestandteilen kann eine oder mehrere elektrische Schnittstellen aufweisen und als Elektropneumatikkomponente bezeichnet sein. Ein Steckplatz kann als Elektropneumatiksteckplatz ausgeführt und derart modular auf eine Elektropneumatikkomponente abgestimmt sein, dass deren elektrische Schnittstellen bei Belegung des Elektropneumatiksteckplatz jeweils insbesondere funktions- und betriebssicher ineinander übergehen, sowie derart, dass deren pneumatische Schnittstellen bei Belegung des Elektropneumatiksteckplatzes jeweils, insbesondere funktions- und betriebssicher, ineinander übergehen. In einer belegten Position eines Elektropneumatiksteckplatzes liegen sich die Elelctronikschnittstellen der elektropneumatische Komponente sowie die Elektropneumatikschnittstelle des Elektropneumatiksteckplatzes diametral gegenüber, sodass ein elektrischer Kontakt hergestellt ist.

Der erfindungsgemäße elektropneumatische Stellungsregler umfasst ferner wenigstens einen pneumatischen Steuerausgang zum Ausgeben eines pneumatischen Stelldrucksignals an den Stellantrieb. Vorzugsweise ist einer der zwei modularen Pneumatiksteckplätze mit einer modularen Pneumatikkomponente in Form eines I/P-Wandlers zum Erzeugen des pneumatischen Stelldrucksignals für den Stellantrieb belegt. Der pneumatische Steuerausgang kann vorzugsweise durch eine der Pneumatikkomponenten in einem der modularen Pneumatiksteckplätze gebildet sein. Der modulare Pneumatiksteckplatz ist dazu ausgelegt, eine einzelne modulare Pneumatikkomponente aus einer Gruppe von Pneumatikkomponenten unterschiedlicher Funktionalität unter Herstellung einer pneumatischen Verbindung an den jeweiligen pneumatischen Schnittstellen austauschbar aufzunehmen, beispielsweise einen oder mehrere elektropneumatische Wandler, ein oder mehrere pneumatische Verbindungsmodule insbesondere mit oder ohne Drosselung, und/oder ein Verbindungsmodul mit oder ohne Sensorik, insbesondere Drucksensorik, Temperatursensorik oder dergleichen. Da die wenigstens zwei Pneumatikkomponenten austauschbar an dem erfindungsgemäßen elektropneumatischen Stellgerät vorgesehen sind, ist der wenigstens eine Pneumatiksteckplatz von außen (bezüglich eines Steuergerätegehäuses) leicht zugänglich ausgeführt. Auf diese Weise hat das erfindungsgemäße elektropneumatische Stellgeräts die gewünschte hohe Modularität, die ein Anlagenbetreiber oder Anlagenbauer nutzen kann, um ohne großen Montageaufwand auf sich ändernde Prozessverhältnisse der Anlage einzustellen.

Erfindungsgemäß bilden die wenigstens zwei modularen Pneumatiksteckplätze und der wenigstens eine pneumatischen Steuerausgang eine pneumatische Reihenschaltung. Die pneumatische Reihenschaltung kann weitere modulare Pneumatiksteckplätze umfassen. Beispielsweise können 2, 3, 4, 5 oder mehr modulare Pneumatiksteckplätze mit einem pneumatischen Steuerausgang eine pneumatische Reihenschaltung bilden. Es sei klar, dass sämtliche der wenigstens zwei modularen Pneumatiksteckplätze dem pneumatischen Steuerausgang vorgeschaltet sind. Die pneumatische Reihenschaltung beginnt in Pneumatikfluid-Strömungsrichtung mit einem ersten der modularen Pneumatiksteckplätze, dem ein stromabwärtiger zweiter modularer Pneumatiksteckplatz in Reihe nachgeschaltet ist. Sämtlichen modularen Pneumatiksteckplätzen in Pneumatikfluid-Strömungsrichtung stromabwärts nachgeschaltet folgt in Reihe der pneumatische Steuerausgang des elektropneumatischen Stellungsreglers.

Bei einem Stellungsregler mit mehreren modularen Pneumatiksteckplätzen können diese relativ zueinander unterschieden werden zwischen stromaufwärtigen und stromabwärtigen Pneumatiksteckplätzen. Wenn ein elektropneumatische Stellungsregler eine pneumatische Reihenschaltung mit drei oder mehr modularen Pneumatiksteckplätzen aufweist, kann der vorderste modulare Pneumatiksteckplatz als stromaufwärtigster Pneumatiksteckplatz und der hinterste, dem pneumatischen Steuerausgang unmittelbar vorgeschaltete, als stromabwärtigster modularer Pneumatiksteckplatz bezeichnet werden. Jeder stromaufwärtige modulare Pneumatiksteckplatz liegt stets pneumatisch ferner von dem pneumatischen Steuerausgang als der stromabwärtigeste Pneumatiksteckplatz. Jeder stromabwärtige Pneumatiksteckplatz liegt pneumatisch stets näher an dem pneumatischen Steuerausgang als der stromaufwärtigste modulare Pneumatiksteckplatz. Die Reihenschaltung kann durch eine Pneumatikquelle mit pneumatischer Druckluft versorgt sein. Wird die Reihenschaltung aus einer Pneumatikquelle mit Druckluft versorgt, ist ein stromaufwärtiger Pneumatiksteckplatz stets näher an der Pneumatikquelle angeordnet als ein stromabwärtiger Pneumatiksteckplatz. Stromabwärts beschreibt die Pneumatikfluid-Strömungsrichtung von Pneumatikquelle zu pneumatischem Steuerausgang bzw. Stellantrieb. Stromaufwärts beschreibt die Richtung von pneumatischem Stellantrieb bzw. Steuerausgang zu Pneumatikquelle.

Vorzugsweise ist die Reihenschaltung derart realisiert, dass zwischen den wenigstens zwei Pneumatiksteckplätzen Pneumatikkanäle, beispielsweise in Form einer Kanalplatte, Rohrkanälen oder dergleichen, vorgesehen sind, um eine pneumatische Verbindung von zwei in Reihe unmittelbar hintereinandergeschalteten modularen Pneumatiksteckplätzen zu realisieren. Wenn eine pneumatische Reihenschaltung drei oder mehr modulare Pneumatiksteckplätze umfasst, sei klar, dass eine pneumatische Kanalverbindung stets nur zwischen zwei unmittelbar aufeinanderfolgenden Pneumatikmodulsteckplätzen realisiert ist. Bei einer bevorzugten Ausführung eines elektropneumatischen Stellungsreglers können die pneumatischen Schnittstellen eines Pneumatiksteckplatzes Pneumatikkanalein- und/oder -ausgänge von Pneumatickanalverbindungen insbesondere einer Kanalplatte sein. Der pneumatische Steuerausgang kann alternativ durch eine in den stromabwärtigsten Pneumatiksteckplatz sitzende Pneumatikkomponente realisiert sein. Vorzugsweise umfasst der elektropneumatische Stellungsregler eine Pneumatikkanalverbindung zwischen der wenigstens einen Pneumatikschnittstelle des stromabwärtigsten Pneumatiksteckplatzes, die insbesondere durch eine Kanalplatte und/oder einen Rohrkanal realisiert ist, und dem pneumatischen Steuerausgang.

Indem der modulare Stellungsregler modular mit einer Reihenschaltung von steckbaren und austauschbaren Pneumatikmodulen in einem dafür vorgesehenen und verschalteten Pneumatiksteckplatz ausgestattet ist, kann der modulare Stellungsregler zahlreiche zusätzliche Funktionen realisieren, die bei dem bekannten modularen Stellungsregler nicht möglich sind, dessen pneumatischen Schnittstellen der Pneumatiksteckplätze und darin angeordnete Pneumatikmodule einschließlich der pneumatischen Feldausgänge jeweils parallel zueinander geschaltet sind. Durch die Reihenschaltung werden insbesondere Sicherheitsfunktionen integriert in dem modularen Stellungsregler realisierbar, zu deren Ausführung bei dem bekannten Stellungsregler, wie bei veralteten Stellungsreglern, externe Komponenten notwendig sind, beispielsweise das oben erwähnte Entlüftungsventil. Indem pneumatische Sicherheitskomponenten integriert in dem elektropneumatischen Stellungsregler vorgesehen sein können, kann ein Betreiber oder Konstrukteur einer prozesstechnischen Anlage einfacher und unter wesentlich geringerem wirtschaftlichen Aufwand die Anlage mit dem Stellungsregler auslegen.

Bei einer bevorzugten Ausführung eines erfindungsgemäßen pneumatischen Stellungsreglers ist ein stromabwärtiger Pneumatiksteckplatz der wenigstens zwei Pneumatiksteckplätze mit einer pneumatischen Schaltvorrichtung, wie ein Auf/Zu-Ventil oder Sperrventil, insbesondere ein 2/2-Wegeventil oder 4/2-Wegeventil belegt, die entweder einen Freigabezustand einnimmt, in dem sie eine pneumatische Verbindung zum Übertragen des Stelldrucksignals zwischen wenigstens einem stromaufwärtigen Pneumatiksteckplatz der wenigstens zwei Pneumatiksteckplätze und dem wenigstens einen pneumatischen Steuerausgang bereitstellt, oder einen Sperrzustand einnimmt, in dem sie die pneumatische Verbindung schließt. Vorzugsweise nimmt die Schaltzurichtung in einem Offenzustand bzw. Freigabezustand betriebsgemäß bzw. im Normalbetrieb des Stellungsreglers ein. Der Sperrzustand kann insbesondere als Sicherheitsstellung eingenommen werden. Durch das vorzugsweise druckverlustlose Schließen der pneumatischen Verbindung kann das Stelldrucksignal an dem wenigstens einen pneumatischen Steuerausgang, der vorzugsweise unmittelbar stromabwärtig des mit der Schaltvorrichtung belegten Pneumatiksteckplatzes, vorzugsweise des stromabwärtigsten Pneumatiksteckplatzes, unabhängig von dem stromaufwärts dieses stromabwärtigen Steckplatzes vorliegenden Stelldrucksignal insbesondere konstant gehalten werden. Die Schaltvorrichtung ermöglicht es beispielsweise bei Ausfall der Druckquelle oder Druckverlust in der Versorgungsleitung, die zu der Reihenschaltung führen, einen Druckabfall am pneumatischen Stellantrieb zu verhindern, so dass beispielsweise ein einfachwirkender pneumatischer Stellantrieb mit Federrückstellung seine Position im Wesentlichen beibehält. Es sei klar, dass bei einem elektropneumatischen Stellungsregler mit einer Reihenschaltung, die genau zwei modulare Pneumatiksteckplätze enthält, der stromabwärtige sogleich der stromabwärtigste Pneumatiksteckplatz und der stromaufwärtige sogleich der stromaufwärtigste Pneumatiksteckplatz ist. Bei einem elektropneumatischen Stellungsregler, dessen Reihenschaltung außer dem pneumatischen Steuerausgang nur zwei modulare Pneumatiksteckplätze umfasst, kann also der stromabwärtige Pneumatiksteckplatz unmittelbar dem pneumatischen Steuerausgang vorgeschaltet sein. Bei einem pneumatischen Stellungsregler, dessen Reihenschaltung mehr als zwei modulare Pneumatiksteckplätze enthält, ist klar, dass jedenfalls der stromabwärtigste Pneumatiksteckplatz nicht als stromaufwärtiger Pneumatiksteckplatz zu verstehen ist bzw. dass der stromaufwärtigste Pneumatiksteckplatz nicht als stromabwärtiger Pneumatiksteckplatz zu verstehen ist. Es hat sich gezeigt, dass mit einem gattungsgemäßen pneumatischen Stellungsregler insbesondere die Sicherheitsfunktion "Stellantrieb halten" nur unter besonderem konstruktivem Aufwand zu realisieren ist. Das übliche außenseitige Anflanschen eines Magnetventils zum Schließen einer Steuerdruckleitung zwischen einem stellungsreglerseitigen Steuerausgang und einem durch den Stellungsregler pneumatisch versorgten Stellantrieb kann zu Dichtigkeitsproblemen in dieser Steuerluftverbindung führen, sodass eine Sicherheitsfunktion des Magnetventils beeinträchtigt sein kann. Beispielsweise im Falle einer Fehlfunktion einer beispielsweise explosionsgefährdeten prozesstechnischen Anlage kann bei beeinträchtigter Funktion des Magnetventils eine unerwünschte Leckage der Pneumatikluft in Richtung des explosionsgefährdeten Raums höchst problematisch sein. Indem der neuartige elektropneumatische Stellungsregler die modulare Integration der pneumatischen Schaltvorrichtung gestattet, kann das Risiko einer unerwünschten Leckage stromabwärts des Steuerausgangs deutlich verringert werden.

Gemäß einer Weiterbildung der Erfindung, die mit der vorherigen kombinierbar ist, weist die pneumatische Schaltvorrichtung zum Realisieren des Sperrzustands und des Freigabezustands einen druckentlasteten Schieber oder ein Sitzventil auf. Derartige Sperrglieder benötigen sehr wenig Energie zum Schalten von einem Sperrzustand zu einem Freigabezustand und haben eine kurze Schaltzeit. Alternativ oder zusätzlich umfasst die pneumatische Schaltvorrichtung zum Realisieren des Sperrzustands wenigstens eine weichdichtende Dichtkomponente, wie eine Elastomerdichtung oder eine Thermoplastdichtung, was der pneumatischen Schaltvorrichtung vorzugsweise gestattet in dem Sperrzustand leckagefrei zu sein.

Gemäß einer anderen Weiterbildung der Erfindung, die mit den vorherigen kombinierbar ist, ist die pneumatische Schaltvorrichtung dazu ausgelegt, in dem Freigabezustand die pneumatische Verbindung derart freizugeben, dass in der pneumatischen Schaltvorrichtung, insbesondere durch den Schieber oder das Sitzventil, ein Verbindungskanal ausreichenden Querschnitts bereitgestellt ist, um das Stelldrucksignal ungedrosselt passieren zu lassen. Dabei ist vorzugsweise der Querschnitt nicht mehr als 20%, vorzugsweise nicht mehr als 10%, insbesondere nicht mehr als 5%, größer als notwendig, um das Stelldrucksignal ungedrosselt passieren zu lassen. Die pneumatische Schaltvorrichtung gibt bei dieser Weiterbildung in dem Freigabezustand vorzugsweise genau den Querschnitt frei, der gerade eben ausreichend ist, um zu vermeiden, dass eine Drosselung des Stelldrucksignals in der Schaltvorrichtung erfolgt, der jedoch im Wesentlichen nicht größer ist als dieser gerade ausreichende Öffnungsquerschnitt. Der elektropneumatische Stellungsregler kann einen I/P-Regler umfassen, abhängig von dem im Freigabezustand die pneumatische Schaltvorrichtung beispielsweise proportional regelbar ist. Für eine beispielsweise proportionale Regelung der pneumatischen Schaltvorrichtung in dem Freigabezustand kann diese beispielsweise dasselbe elektrische Steuersignal empfangen wie ein in einem anderen, vorzugsweise stromaufwärtigen, Pneumatiksteckplatz angeordneter elektropneumatischer Stellsignalwandler, der vorzugsweise dazu ausgelegt sein kann, das pneumatische Stelldrucksignal zum Ansteuern des Stellantriebs abzugeben. Bei einer solchen Weiterbildung der Erfindung hat sich als vorteilhaft gezeigt, dass infolge der Anpassungsbewegungen des Stellgliedes der pneumatischen Schaltvorrichtung in dem Freigabezustand dieses auch im Notfall beweglich ist. Ferner hat sich als vorteilhaft gezeigt, dass bei einer Störung der notwendige Stellweg des Sperrgliedes und dessen Stellzeit auf ein Minimum reduziert ist, sodass der Sperrzustand nach einer äußerst geringen Ansprechzeit erreicht werden kann.

Gemäß einer weiteren Weiterbildung der Erfindung, die mit den vorherigen kombinierbar ist, ist der elektropneumatische Stellungsregler dazu ausgelegt, die IST-Stellposition eines Sperrgliedes, wie ein Schieber oder ein Ventilglied, der pneumatischen Schaltvorrichtung mit einem Positionssensor, zu erfassen. Durch die Erfassung der Sperrglied-IST-Position kann das dynamische Verhalten erfasst und gemessen werden, um über Verschleiß, Fehlfunktion oder einen drohenden Ausfall Rückschlüsse zu erhalten.

Bei einer alternativen Ausführung des erfindungsgemäßen elektropneumatischen Stellungsreglers kann ein stromabwärtiger Pneumatiksteckplatz der wenigstens zwei Pneumatiksteckplätze mit einem Notentlüftungsventil belegt sein, das entweder einen Übertragungszustand zum Bereitstellen einer pneumatischen Verbindung von einem stromaufwärtigen pneumatischen Steckplatz der wenigstens zwei Pneumatiksteckplätze zu dem pneumatischen Steuerausgang einnimmt oder einen Entlüftungszustand, in dem das Stelldrucksignal am pneumatischen Steuerausgang, insbesondere unabhängig von dem Stelldrucksignal an dem stromaufwärtigen Pneumatiksteckplatz, auf Umgebungsdruck gesetzt wird.

Bei einer bevorzugten Weiterbildung eines erfindungsgemäßen elektropneumatischen Stellungsreglers ist die pneumatische Schaltvorrichtung (oder das Entlüftungsventil) dazu ausgelegt, den Sperrzustand (oder den Entlüftungszustand) infolge eines Fehlerzustands oder Alarmzustands insbesondere der prozesstechnischen Anlage, des Feldgeräts, des Stellungsreglers, des Stellantriebs und/oder der Stellarmatur einzunehmen. Vorzugsweise ist die pneumatische Schaltvorrichtung dazu ausgelegt, in dem Sperrzustand zu verharren, solange der Fehlerzustand oder der Alarmzustand vorliegt oder bis die Schaltvorrichtung ein Entwarnungssignal empfängt. Ein Fehler- oder Alarmzustand kann beispielsweise bei Druckabfall stromaufwärts des Steuerausgangs vorliegen. Vorzugsweise kann die pneumatische Schaltvorrichtung dazu ausgelegt sein, selbsttätig einen Druckabfall insbesondere an ihrem stromaufwärtigen Pneumatikeingang, insbesondere ihrer stromaufwärtigen pneumatischen Schnittstelle, zu erfassen, und insbesondere infolge eines selbsttätigen Erfassens eines Druckabfalls den Sperrzustand einzunehmen. Alternativ oder zusätzlich kann die pneumatische Schaltvorrichtung dazu ausgelegt sein, infolge eines von einem Drucksensor festgestellten Druckabfalls, Druckmesswerts und/oder Unterschreitens eines vorbestimmten Druck-Mindestschwellwerts und/oder Überschreiten eines Druck-Höchstschwellwerts den Sperrzustand einzunehmen. Gemäß einer alternativen Ausführung, die zusätzlich oder alternativ zu den vorgenannten Ausführungen vorgesehen sein kann, kann die pneumatische Schaltvorrichtung dazu ausgelegt sein, den Sperrzustand durch ein elektrisches Signal, insbesondere ein elektrisches Notsignal, wie ein dem Stellungsregler oder der Schaltvorrichtung mitgeteilten Fehler- oder Alarmzustand, den Sperrzustand einzunehmen. Beispielsweise kann der Ausfall eines Versorgungsstroms und/oder Steuerstrom ein elektrisches Notsignal des elektropneumatischen Stellungsreglers darstellen.

Gemäß einer bevorzugten Ausführung eines erfindungsgemäßen elektropneumatischen Stellungsreglers ist die pneumatische Reihenschaltung stromaufwärts ihres wenigstens einen pneumatischen Steuerausgangs nur an vorzugsweise genau einem stromaufwärtigen Pneumatiksteckplatz der wenigstens zwei Pneumatiksteckplätze entlüftbar. Vorzugsweise kann die pneumatische Reihenschaltung nur an einem stromaufwärtigen Pneumatiksteckplatz mit einer Drucksenke bzw. der Umgebungsluft in Verbindung gebracht werden. Beispielsweise kann ein 3/2-Wegeventil in einem stromaufwärtigen Pneumatiksteckplatz derart eingerichtet sein, dass das Stelldrucksignal an den stromabwärtigen Pneumatikausgängen bzw. an der stromabwärtigen Pneumatikschnittstelle des stromaufwärtigen Pneumatiksteckplatzes auf Umgebungsdruck setzt. Im Normalbetrieb des modularen Stellungsreglers kann bei Einsatz beispielsweise einer betriebsgemäß einen Freigabezustand einnehmenden Schaltvorrichtung in dem stromabwärtigen Pneumatiksteckplatz so auch das pneumatische Stelldrucksignal an dem Steuerausgang des Stellungsreglers und folglich der Druck in der Antriebskammer des mit dem Steuerausgang verbundenen Stellantriebs auf Umgebungsdruck gesetzt werden, so dass beispielsweise bei einem einfachwirkenden pneumatischen Stellantrieb mit Federrückstellung dessen federbetätigte Rückstellposition eingenommen werden kann. Bei einem solchen elektropneumatischen Stellungsregler fährt bei Stromausfall das 3/2-Wegeventil oder dergleichen in seine Entlüftungsstellung und die pneumatische Schaltvorrichtung in ihren Sperrzustand, so dass die Entlüftung in dem stromaufwärtigen Pneumatiksteckplatz erfolgt ohne dass eine Entlüftung der pneumatischen Antriebskammer des Stellantriebs durchgeführt wird.

Bei einer bevorzugten Ausführung eines erfindungsgemäßen elektropneumatischen Stellungsreglers ist ein stromaufwärtiger Pneumatiksteckplatz, vorzugsweise der stromaufwärtigste Pneumatiksteckplatz, der wenigstens zwei Pneumatiksteckplätze mit einem elektropneumatischen Stellsignalwandler belegt, der dazu ausgelegt ist, das pneumatische Stelldrucksignal zum Ansteuern des Stellantriebs abzugeben. Vorzugsweise kann der elektropneumatische Stellsignalwandler ein elektrisches Stellsignal empfangen, beispielsweise von einer Regelungs- und/oder Steuerungselektronik, wie einem Mikrocontroller, einem Mikroprozessor, einer analogen Steuerungseleketronik, einer Leitwarte oder dergleichen. Vorzugsweise erzeugt der elektropneumatische Stellsignalwandler das pneumatische Stelldrucksignal auf Basis des empfangenen elektrischen Stellsignals. Der elektropneumatische Stellsignalwandler realisiert eine modulare Pneumatikkomponente in Form einer modularen Elektropneumatickomponente. Der elektropneumatische Stellsignalwandler, mit dem der stromaufwärtige Pneumatiksteckplatz belegt ist, empfängt vorzugsweise ein elektrisches Stellsignal via einer elektrischen Schnittstellenverbindung des modularen Elektropneumatiksteckplatzes, in der der elektropneumatische Stellsignalwandler eingesetzt ist.

Gemäß einer bevorzugten Ausführung umfasst der elektropneumatische Stellungsregler ferner einen pneumatischen Versorgungseingang zum Bereitstellen eines pneumatischen Versorgungsdrucksignals an die pneumatische Reihenschaltung. Das pneumatische Versorgungsdrucksignal stammt vorzugsweise von einer Pneumatikquelle. Das pneumatische Versorgungsdrucksignal kann beispielsweise ein Druck von 6 bar, 10 bar oder mehr sein.

Gemäß einer bevorzugten Ausführung, die mit der vorherigen kombinierbar ist, umfasst der elektropneumatische Stellungsregler ferner wenigstens einen elektrischen Feldeingang zum Empfangen eines Versorgungsstroms und/oder eines elektrischen Stellsignals, wie einen Steuerstrom, insbesondere einen 4..20 mA Stellsignal, vorzugsweise zum Ansteuern eines gegebenenfalls in einem stromaufwärtigen Pneumatiksteckplatz eingesetzten elektropneumatischen Stellsignalwandlers. Ein Fehlerzustand zum Veranlassen des Sperrzustands der gegebenenfalls vorgesehenen pneumatischen Schaltvorrichtung kann von einer Elektronikkomponente des Stellungsreglers und/oder einer Steuerungselektronik, wie einem Mikrocontroller, des Stellungsreglers erkannt und der elektropneumatischen Schaltvorrichtung mitgeteilt werden, beispielsweise wenn der Versorgungsstrom an dem Versorgungseingang und/oder das elektrische Stellsignal an dem Feldeingang ausfällt oder unter einen vorbestimmten Schwellenwert fällt.

Bei einer bevorzugten Ausführung der Erfindung umfasst der elektropneumatische Stellungsregler ferner wenigstens einen, vorzugsweise zwei, drei oder mehr, modularen Elektroniksteckplatz zur Belegung mit jeweils einer modularen Elektronikkomponente, wie einen Sensor, insbesondere eine binärer Positionssensor, ein vorzugsweise binärer elektronischer Signaleingang- und/oder -ausgang oder dergleichen. Der wenigstens eine modulare Elektroniksteckplatz und die Elektronikkomponente sind derart modular aufeinander abgestimmt, dass deren elektrische Schnittstellen bei Belegung eines Elektroniksteckplatzes ineinander übergehen. Eine Elektronikkomponente ist vorzugsweise als reine Elektronikkomponente frei von pneumatischen Funktionselementen realisiert. Insbesondere ist ein Elektroniksteckplatz frei von pneumatischen Schnittstellen realisiert oder derart ausgestaltet, dass beim Einsetzen einer (reinen) Elektronikkomponente alle eventuellen pneumatischen Schnittstellen des Steckplatzes druckverlustfrei abgedichtet bzw. versiegelt sind. Vorzugsweise ist der Elektronisteckplatz als reiner Elektroniksteckplatz frei von elektropneumatischen Schnittstellen realisiert. Vorzugsweise umfasst der Stellungsregler eine elektrische Verbindung zwischen einer Stellungsreglerelektronik, insbesondere einer Steuerungseleketronik, und der oder den elektrischen Schnittstellen des Elektroniksteckplatzes zur Kommunikation mit der eingesetzten Elektronikkomponente. Eine Elektronikkomponente kann beispielsweise ein modular realisiertes Not-Aus Steuersignal sein, das eine Stellungsreglerelektronik dazu veranlasst, ein Entlüftungs- und/oder Notzustand-Stellsignal an die Pneumatiksteckplätze und/oder die Pneumatikkomponenten zu senden. Beispielsweise kann eine pneumatische Schaltvorrichtung durch Empfang eines Notbetätigungssignals infolge eines in dem Elektroniksteckplatz eingesetzten modularen Notbetätigungs-Steuersignaleingang empfangenen Signal in den Sicherheitszustand bzw. Sperrzustand verbracht werden. Zur Belegung der Elektroniksteckplätze ist vorzugsweise eine Gruppe aus wenigstens zwei modularen Elektronikkomponenten unterschiedlicher Funktionalität vorgesehen, beispielsweise ein Datenspeicher, ein elektrischer Signaleingang und/oder ein Mikroprozessor oder dergleichen.

Gemäß einer bevorzugten Ausführung der Erfindung kann der elektropneumatische Stellungsregler wenigstens einen weiteren, insbesondere hinsichtlich einer Druckquelle parallel zu der Reihenschaltung vorgesehenen Pneumatiksteckplatz und/oder wenigstens eine weitere Reihenschaltung, die wenigstens zwei pneumatischen Steckplätze und wenigstens einen weiteren pneumatischen Steuersignalausgang umfasst, aufweisen. Wenigstens eine weitere Pneumatikreihenschaltung mit wenigstens einem pneumatischen Steuersignalausgang kann zur Betätigung eines weiteren pneumatischen Antriebs kommen insbesondere eines zweiten pneumatischen Stellantriebs vorgesehen sein. Bei einer bevorzugten Ausführung eines erfindungsgemäßen elektropneumatischen Stellungsreglers mit einer zusätzlichen Reihenschaltung, die hinsichtlich eines Pneumatikquelleneingangs mit der ersten Reihenschaltung parallel geschaltet ist, kann durch den pneumatischen Steuersignalausgang der ersten Reihenschaltung und den anderen Steuersignalausgang der zweiten Reihenschaltung je eine von zwei entgegengesetzt wirkenden pneumatischen Antriebskammern eines pneumatisch doppeltwirkenden Stellantriebs betätigt sein.

Gemäß einer bevorzugten Ausführung, die mit den vorherigen kombinierbar ist, kann ein elektropneumatischer Stellungsregler ferner wenigstens einen Drucksensor, vorzugsweise je einen Drucksensor, zum Erfassen wenigstens eines Ist-Druckwerts, vorzugsweise mehrerer Ist-Druckwerte, in der pneumatischen Reihenschaltung. Einer oder mehrere Drucksensoren können insbesondere am stromabwärtigen Beginn, inmitten und/oder am stromaufwärtigen Ende der pneumatischen Reihenschaltung einen Ist-Druckwert messen. Vorzugsweise ist wenigstens ein Drucksensor, vorzugsweise je ein Drucksensor, zum Erfassen des Steuerdrucksignals am Steuerausgang der pneumatischen Reihenschaltung und/oder zum Erfassen des Stelldrucksignals in der pneumatischen Reihenschaltung zwischen einem stromaufwärtigen Pneumatiksteckplatz und einem stromabwärtigen Pneumatiksteckplatz der wenigstens zwei Pneumatiksteckplätze und/oder zum Erfassen eines gegebenenfalls vorliegenden Versorgungsdrucksignals an einem eventuellen pneumatischen Versorgungseingang der pneumatischen Reihenschaltung vorgesehen. Bei einem elektropneumatischen Stellungsregler mit mehr als zwei in Reihe geschalteten Pneumatiksteckplätze kann vorzugsweise zwischen zwei unmittelbar pneumatisch in Reihe geschalteten Pneumatiksteckplätzen ein Drucksensor vorgesehen sein. Bei einem pneumatischen Stellungsregler mit mehreren Reihenschaltungen kann je einer oder je mehrere Drucksensor(en) in den unterschiedlichen pneumatischen Reihenschaltungen angeordnet sein.

Gemäß einer bevorzugten Ausführung der Erfindung, die mit den vorherigen kombinierbar ist, umfasst der elektropneumatische Stellungsregler ein Gehäuse, das den wenigstens einen pneumatischen Steuerausgang aufweist und in den die Reihenschaltung(en) einschließlich der zwei modularen Pneumatiksteckplätze der Reihenschaltung untergebracht ist. Die wenigstens zwei Pneumatiksteckplätze sowie sämtliche gegebenenfalls weiteren Pneumatik- oder Elektroniksteckplätze können durch je eine Vertiefung oder Aussparung insbesondere in einer Gehäusewand des Stellungsreglers realisiert sein. In dieser Vertiefung kann die Elektronik- oder Pneumatikkomponente formschlüssig aufgenommen sein. Vorzugsweise hat ein Pneumatik- oder Elektroniksteckplatz einen Andockmechanismus, der eine Form- und/oder Kraftschlusseinrichtung, wie eine Rasteinrichtung, insbesondere eine manuell betätigbare Klemme oder eine Schraubverbindung zum lösbaren Befestigen der jeweiligen Elektronik- oder Pneumatickomponente in dem modularen Steckplatz umfasst. Die Form- und/oder Kraftschlusseinrichtung kann vorzugsweise dazu ausgelegt sein, eine Vorspannung der jeweiligen Steckkomponente mitzuteilen, so dass die jeweiligen elektrischen und/oder pneumatischen Schnittstellen des Elektroniksteckplatzes bzw. Pneumatiksteckplatzes und der eingesetzten Komponente gegeneinander gedrückt werden, um den elektrischen Kontakt bzw. pneumatischen Anschluss herzustellen. Vorzugsweise ist das Gehäuse insbesondere fluiddicht, staubdicht und/oder gasdicht abschließbar. Das Gehäuse kann in einem ersten Abteil einer insbesondere fest installierten Stellungsreglerelektronik, insbesondere einer Steuerungselektronik oder Regelungselektronik, aufnehmen. Bei einer bevorzugten Ausführung der Erfindung sind die wenigstens zwei modularen Pneumatiksteckplätze sowie gegebenenfalls weitere Pneumatik- und/oder Elektroniksteckplätze an einer Außenwand des Gehäuses oder einer Trennwand des Abteils eingerichtet, vorzugsweise derart, dass eine Bedienperson dadurch einen manuellen Zugriff auf die wenigstens zwei Pneumatiksteckplätze hat. Die wenigstens zwei modularen Pneumatiksteckplätze sowie insbesondere eventuelle weitere Steckplätze können mittels eines abnehmbaren Gehäuseteils, wie einem Deckel, insbesondere zur Bildung eines zweiten Gehäuseabteils vorzugsweise fluiddicht verschließbar sein.

Vorzugsweise weist das Gehäuse den gegebenenfalls vorgesehenen elektrischen Feldeingang und/oder den gegebenenfalls vorgesehenen pneumatischen Versorgungseingang auf. Insbesondere sind die gegebenenfalls vorgesehenen modularen Elektroniksteckplätze in dem Gehäuse untergebracht.

Die Erfindung betrifft auch ein elektropneumatisches Feldgerät, das einen erfindungsgemäßen elektropneumatischen Stellungsregler umfasst, der insbesondere gemäß einer der oben beschriebenen bevorzugten Ausführungen oder Weiterbildungen ausgestaltet sein kann, sowie den mit dem wenigstens einen pneumatischen Steuerausgang verbundenen, insbesondere einfachwirkenden oder doppeltwirkenden, wenigstens einen pneumatischen Stellantrieb. Ein doppeltwirkender pneumatischer Stellantrieb kann beispielsweise wie oben beschrieben von einem erfindungsgemäßen elektropneumatischen Stellungsregler betätigbar sein. Alternativ kann eine pneumatische Antriebskammer eines doppeltwirkenden pneumatischen Stellantriebs mit einem erfindungsgemäßen elektropneumatischen Stellungsregler betätigt sein und die andere pneumatische Arbeitskammer des pneumatischen Stellantriebs mit einem zweiten erfindungsgemäßen oder anderen elektropneumatischen Stellungsregler.

Bei einer bevorzugten Ausführung eines erfindungsgemäßen elektropneumatischen Feldgeräts ist das pneumatische Feldgerät stromaufwärts des wenigstens einen pneumatischen Stellantriebs betriebsgemäß ausschließlich an einem stromaufwärtigen Pneumatiksteckplatz entlüftbar. Das heißt, der Steuerausgang des erfindungsgemäßen Stellgeräts des elektropneumatischen Feldgeräts ist derart mit dem pneumatischen Stellantrieb verbunden, dass bei ordnungsgemäßem Betrieb des Feldgeräts im Wesentlichen kein Druckverlust zwischen dem pneumatischen Steuerausgang und der Arbeitskammer des pneumatischen Stellantriebs stattfindet. Vorzugsweise ist das elektropneumatische Feldgerät derart ausgestaltet, dass eine Entlüftung des wenigstens einen pneumatischen Stellantriebs betriebsgemäß ausschließlich mittels des mit dem Stellantrieb pneumatisch verbundenen elektropneumatischen Stellungsreglers erfolgen kann.

Weitere Eigenschaften, Merkmale und Vorteile der Erfindung werden durch die folgende Beschreibung bevorzugter Ausführungen der Erfindung anhand der beiliegenden Zeichnungen deutlich, in denen zeigen:
- Fig. 1: eine schematische Darstellung einer ersten Ausführung eines erfindungsgemäßen elektropneumatischen Feldgeräts mit einem erfindungsgemäßen elektropneumatischen Stellungsregler; und
- Fig. 2: eine schematische Darstellung einer zweiten Ausführung eines erfindungsgemäßen elektropneumatischen Feldgeräts mit einem alternativen erfindungsgemäßen elektropneumatischen Stellungsregler.

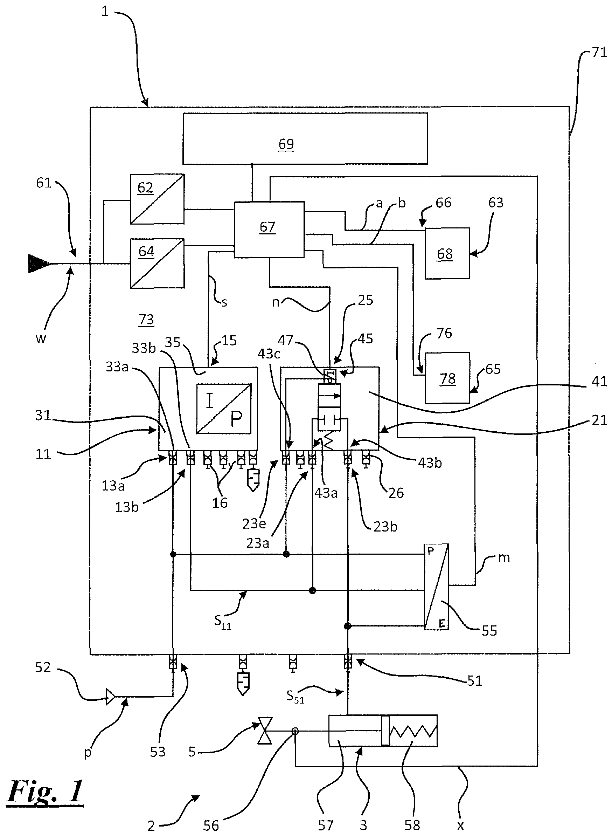

In Fig. 1 ist ein elektropneumatischer, erfindungsgemäßer Stellungsregler im Allgemeinen mit der Bezugsziffer 1 versehen. Der elektropneumatische Stellungsregler 1 ist Teil eines erfindungsgemäßen elektropneumatischen Feldgerätes, das im Allgemeinen mit der Bezugsziffer 2 versehen ist. Feldgerät 2 kann zur Regelung einer Prozessfluidströmung einer nicht näher dargestellten prozesstechnischen Anlage, wie einer petrochemischen Anlage, einer Lebensmittel verarbeitenden Anlagen, wie einer Brauerei, oder dergleichen, eingesetzt werden. Das elektropneumatische Feldgerät 2 umfasst als Hauptbestandteile den elektropneumatischen Stellungsregler 1 und einen damit verbundenen einfachwirkenden pneumatischen Stellantrieb 3.

Der elektropneumatische Stellungsregler 1 umfasst als Hauptbestandteile, die im Folgenden näher erläutert werden, einen ersten modularen Pneumatiksteckplatz 11 und einen mit dem ersten pneumatisch in Reihe geschalteten zweiten modularen Pneumatiksteckplatz 21, sowie einen auf die in Reihe geschalteten Pneumatiksteckplätze 11, 21 pneumatisch nachfolgenden pneumatischen Steuerausgang 51 zum Ausgeben eines pneumatischen Stelldrucksignals S₅₁ an den Stellantrieb 3.

Zwischen dem pneumatischen Steuerausgang 51 und dem Stellantrieb 3 bzw. dessen pneumatischer Arbeitskammer 57 sind vorzugsweise keine pneumatischen oder elektropneumatischen Funktionselemente angeordnet, die eine Entlüftung der pneumatischen Arbeitskammer 57 des pneumatischen Stellantriebs 3 bewirken könnten. Insofern kann das pneumatische Steuersignal bzw. Stelldrucksignal S₅₁, welches an dem Steuerausgang 51 abgegeben wird, ungehindert und vorzugsweise unbeeinflusst der pneumatischen Arbeitskammer 57 des Stellantriebs 3 zugeführt werden. Der Stellantrieb 3 ist mit einem als exemplarische Ausführung einer grundsätzlich beliebigen Stellarmatur dargestellten Stellventil 5 über eine Spindel oder Welle mechanisch verbunden. Ein insbesondere mechanisch oder elektrisch arbeitender Positionssensor 56 greift die Momentanstellung x des Stellventils 5 ab.

Der Positionssensor 56 gibt ein Positionssignal an eine Stellungsreglerelektronik 67, wie einen Mikroprozessor oder Mikrocontroller ab, der in einem Innenraum 73 eines Gehäuses 71 des Stellgeräts 1 untergebracht ist. Die Stellungsreglerelektronik 67 empfängt über einen elektrischen Feldeingang 61 am Feldgerätegehäuse 71 ein Soll-Stell-Signal w von einer nicht näher dargestellten Leitstelle der prozesstechnischen Anlage.

Das Soll-Stell-Signal w, das der Stellungsregler 1 am elektrischen Feldeingang 61 empfängt, kann ein digitales und/oder analoges Signal sein. Wenn die Steuer- und/oder Regelungselektronik 67 des Stellungsreglers 1 als Mikrocontroller realisiert ist, kann zwischen dem elektrischen Feldeingang 61 und dem Mikrocontroller 67 ein Analog-Digital-Wandler 64 vorgesehen sein, um ein analoges Soll-Stell-Signal, beispielsweise ein 4..20 mA Signal, für die Steuer- und/oder Regelungselektronik 67 aufzubereiten. Alternativ oder zusätzlich kann zwischen dem Feldeingang 61 des Stellungsreglers 1 und der Steuer- und/oder Regelungselektronik 67 ein (oder mehrere) weiterer Kommunikationsbaustein 62, beispielsweise zur Hart-Kommunikation, Fieldbus-Kommunikation oder dergleichen, bereitgestellt sein. Die Steuer- und oder Regelungselektronik 67 des Stellungsreglers 1 kann ferner über eine Benutzerschnittstelle 69, wie ein Touch-Display oder dergleichen, verfügen.

Der elektropneumatische Stellungsregler 1 hat neben dem elektrischen Feldeingang 61 einen pneumatischen Feldeingang 53. Über den pneumatischen Feldeingang oder Versorgungseingang 53 ist der elektropneumatische Stellungsregler 1 mit einer Pneumatikquelle 52 verbunden, die dem Stellungsregler 1 ein pneumatisches Versorgungsdrucksignal p von beispielsweise 6 bar, 10 bar, oder mehr zur Verfügung stellen kann. Der erste oder stromaufwärtige modulare Pneumatiksteckplatz 11 hat eine pneumatische Eingangsschnittstelle 13a, die pneumatisch mit dem Versorgungseingang 53 am Gehäuse 71 des Stellungsreglers 1 verbunden ist, um das Versorgungsdrucksignal p zu erhalten.

Der Stellungsregler 1 weist ein Gehäuse 71 auf, das die Komponenten des Stellungsreglers aufnimmt. Das Gehäuse 71 kann einen fluiddicht abschließbaren Hohlraum oder Innenraum 73 aufweisen, in dem unter anderem elektrische Leitungen, pneumatische Verbindungsleitungen, insbesondere in Form von Kanalplatten oder Kanalrohren, und/oder ein Mikroprozessor untergebracht sind. Der Feldeingang 61 für das Soll-Stell-Signal w von einer Leitwarte oder dergleichen, der pneumatische Versorgungseingang 53 zur Versorgung des Stellungsreglers 1 mit Versorgungsdruck p von einer Pneumatikquelle 52, ein pneumatischer Steuerausgang 51 zum Betätigen eines pneumatischen Stellantriebs 3 und ein Sensorsignaleingang für die Übertragung der von dem Positionssensor 56 erfassten Momentanstellung x des Stellventils 5 sind in der Wandung des Gehäuses 71 vorgesehen.

Die unten im Detail beschriebenen Steckplätze sowie die darin eingesetzten Steckkomponenten können zum Schutz vor äußeren Einflüssen mittels eines an dem Gehäuse 71 lösbar befestigbaren, insbesondere verschraubbaren, Deckels fluiddicht eingekapselt werden. Bei Austausch der modularen Steckkomponenten kann der Deckel abgenommen werden, damit der modulare Austauschvorgang durchgeführt werden kann. Der Innenraum 73 des Stellungsreglers kann gegenüber den Aufnahmen der modularen Steckplätze durch Wände getrennt sein. Insbesondere kann der Innenraum 73 des Stellungsreglers 1 von den Aufnahmen der Steckplätze derart getrennt sein, dass bei einem unbelegten Steckplatz der Innenraum 73 gegenüber der Umgebung verschlossen bleibt.

Der elektropneumatische Stellungsregler hat zwei im Wesentlichen gleich aufgebaute, von außen frei zugängliche Pneumatiksteck- oder -einschubplätze 11, 21, welche optional mit einzelnen Pneumatikkomponenten unterschiedlicher Bauart belegbar sind. Eine Pneumatikkomponente kann ein I/P-Wandler, ein pneumatisch betriebener Stromgenerator, ein Ventilbaustein, beispielsweise ein 2/2-Wegeventil, 3/2-Wegeventil, oder dergleichen sein. Eine Pneumatikkomponente kann realisiert sein als pneumatisches Verbindungsmodul, also ohne Ventilfunktionalität, zum Herstellen einer Verbindungsleitung vom pneumatischen Eingang 13a (23a, 23c) zum pneumatischen Ausgang 13b (13d, 23b, 23d) des Pneumatiksteckplatzes. Ein pneumatisches Verbindungsmodul kann beispielsweise mit einer Drossel ausgestaltet sein, um einen gegenüber einem einfachen Kanal deutlich erhöhten Pneumatikfluid-Widerstand realisieren. Ein pneumatisches Verbindungsmodul kann optional mit oder ohne Sensorik ausgestaltet sein, beispielsweise Drucksensorik, Temperatursensorik oder dergleichen. Ein Verbindungsmodul mit integrierter Sensorik kann auch als Pneumatiksensormodul bezeichnet sein. Ein solches Pneumatiksensormodul kann dazu dienen, Ist-Werte hinsichtlich des Pneumatikfluids zu erfassen, um diese insbesondere der Steuerungs- und/oder Regelungselektronik 67 des Stellungsreglers 1 bereitzustellen.

In den Pneumatiksteckplätzen 11, 21 können Pneumatikkomponenten gleicher, jedoch vorzugsweise unterschiedlicher, Funktionsweise eingesetzt werden. Jeder Steckplatz ist vorzugsweise dazu ausgelegt, nur eine einzelne Pneumatikkomponente aufzunehmen. Die Pneumatiksteckplätze 11, 21 sind derart modular angepasst, dass sie, je nachdem welche vorbestimmte Pneumatikkomponente eingesetzt ist, die Funktion der eingesetzten Pneumatikkomponente durch Herstellung von Kommunikationsleitungen gewährleistet. Jeder einzelne Pneumatiksteckplatz 11, 21 besitzt eine pneumatische Eingangsschnittstelle 13a bzw. 23a über die der jeweilige Steckplatz 11 oder 21 Pneumatikfluid aus Richtung von einer Pneumatikquelle 52 zugeführt werden kann.

Bei dem erfindungsgemäßen elektropneumatischen Stellungsregler 1 sind die Pneumatiksteckplätze 11, 21 derart in Reihe geschaltet, dass die pneumatische Verbindung von der Pneumatikquelle 52 zu der pneumatischen Antriebskammer 57 des pneumatischen Stellantriebs zwingend zunächst durch den stromaufwärtigen Pneumatiksteckplatz 11 und erst anschließend durch den stromabwärtigen Pneumatiksteckplatz 21 fließt, um anschließend weiter zu dem pneumatischen Stellantrieb 3 zu fließen.

Bei dem elektropneumatischen Stellungsregler 1 ist die Pneumatikquelle 52 zur Übertragung eines Versorgungsdrucksignals p über den Versorgungseingang 53 des Stellungsreglers 1 mit dem Pneumatikeingang 13a des Pneumatiksteckplatzes 11 verbunden. Das in dem Pneumatiksteckplatz 11 eingesetzte Pneumatikmodul, das vorliegend als I/P-Wandler 31 realisiert ist, weist einen pneumatischen Eingang 33a auf, der zur Pneumatikfluidübertragung abdichtend mit dem Eingang 13a des ersten Pneumatiksteckplatzes 11 verbunden ist. Der I/P-Wandler 31 wird durch die Steuer- und/oder Regelungselektronik 67 mit einem elektrischen Steuersignal s angesteuert. Der I/P-Wandler 31 realisiert einen elektropneumatischen Stellsignalwandler, der dazu ausgelegt ist, auf Basis eines von einer Steuerungs- und/oder Regelungselektronik 67 empfangenen elektrischen Steuersignals s ein pneumatisches Stelldrucksignal S₁₁ auszugeben. Der elektropneumatische Stellsignalwandler 31 beeinflusst abhängig von dem empfangenen elektrischen Steuersignal s die Verbindung von dem pneumatischen Eingang 33a zu dem pneumatischen Ausgang 33b des Stellsignalwandlers 31, um aus dem zur Verfügung stehenden Versorgungsdrucksignal p ein Steuerdrucksignal S₁₁ zu generieren, mit dem der Stellantrieb 3 veranlasst werden kann, das Stellventil 5 in eine gewünschte Soll-Stell-Position zu bringen. Der pneumatische Ausgang 33b des Stellsignalwandlers 31 ist zur pneumatischen Steuerdruckübertragung abdichtend verbunden mit dem pneumatischen Ausgang 13b des stromaufwärtigen Pneumatiksteckplatzes 11. Die pneumatischen Eingänge 13a, 33a und Ausgänge 13b, 33b des Pneumatiksteckplatzes 11 und der Pneumatikkomponente 31 bilden pneumatische Schnittstellen des Steckplatzes 11 und der eingesteckten Pneumatikkomponente 31, welche im eingesteckten Zustand der Pneumatikkomponente zur Realisierung einer Pneumatikfluidverbindung funktions- und betriebssicher ineinander übergehen.

Der elektropneumatische Stellsignalwandler 31 kann beispielsweise als 3/2-Wegeventil realisiert sein, um ein Stelldrucksignal S₁₁ für den Stellantrieb 3 bereitzustellen, welcher zwischen dem Umgebungsdruck und dem Druck des Pneumatikversorgungssignals p liegt.

Der pneumatische Ausgang 13b des ersten Steckplatzes 11 ist pneumatisch verbunden mit dem pneumatischen Eingang 23a des zweiten, stromabwärtigen Pneumatiksteckplatzes 21. Der stromabwärtige Pneumatiksteckplatz 21 hat einen pneumatischen Ausgang 23b, der über dem pneumatischen Steuerausgang 51 des Stellungsreglers 1 pneumatisch in Verbindung steht mit der pneumatischen Arbeitskammer 57 des pneumatischen Stellantriebs 3, um dem Stellantrieb 3 das pneumatische Stellsignal S₅₁ mitzuteilen.

In dem zweiten Pneumatiksteckplatz 21 ist vorliegend eine pneumatische Schaltvorrichtung in Form eines Auf/Zu-Ventils 41 eingesetzt, das die pneumatische Verbindung zwischen dem pneumatischen Eingang 23a und dem pneumatischen Ausgang 23b des Pneumatiksteckplatzes 21 entweder öffnen und somit freigeben oder verschließen und somit trennen kann. Solange das Auf/Zu-Ventil 41 die pneumatische Verbindung von dem Eingang 23a zu dem Ausgang 23b des Pneumatiksteckplatzes 21 freigibt, entspricht das pneumatische Stelldrucksignal S₅₁ im Wesentlichen dem pneumatischen Stelldrucksignal S₁₁, das von dem Ausgang 13b des ersten pneumatischen Steckplatzes 11 kommt. Im geschlossenen Zustand des Auf/Zu-Ventils 41 wird die Verbindung vom Eingang 23a zum Ausgang 23b des Steckplatzes 21 derart getrennt, dass das Stelldrucksignal S₅₁ am Steuerausgang 51 des Feldgeräts unabhängig von dem pneumatischen Stelldrucksignal S₁₁, das von dem ersten pneumatischen Steckplatz 1 in Richtung des Stellantriebs 3 ausgegeben ist und das insbesondere konstant sein kann. Wenn beispielsweise die pneumatische Verbindung von der Pneumatikquelle 52 zu dem ersten elektropneumatischen Steckplatz 11 unterbrochen wird oder eine Leckage auftritt, was einen Druckverlust am pneumatischen Versorgungseingang 53 des Stellungsreglers 1 zur Folge haben kann, kann das Auf/Zu-Ventil 41 in dem zweiten pneumatischen Steckplatz 21 in die geschlossene Sicherheitsstellung verbracht werden, so dass ein Druckverlust in der pneumatischen Antriebskammer 57 des Antriebs 3 vermieden wird und dieser in seine aktuellen Position verharrt. Auf diese Weise ist sichergestellt, dass selbst bei ungewolltem Druckabfall kein unerwünschter Versorgungsdruckabfall in dem Stellantrieb 3 erfolgt, so dass der Stellantrieb 3 nicht unbeabsichtigt infolge der Vorspannkraft der Rückstellfeder in der Federkammer 58 des Stellantriebs in eine geschlossene oder geöffnete Endstellung verfährt. Ein Auf/Zu-Ventil 41 kann beispielsweise als 2/2-Wegeventil realisiert sein.

Das Auf/Zu-Ventil 41 hat einen pneumatischen Eingang 43a und einen pneumatischen Ausgang 43b, die jeweils mit dem pneumatischen Eingang 23a bzw. dem pneumatischen Ausgang 43b des Pneumatiksteckplatzes 21, in dem das Auf/Zu-Ventil 41 sitzt, ineinander übergehen.

Der Zustandswechsel, also das Schalten der Schaltvorrichtung 41 kann beispielsweise durch ein elektrisches Notstellsignal von der Steuerungs- und/oder Regelungselektronik 67 an das Auf/Zu-Ventil 41 ausgelöst werden. Vorzugsweise ist der elektropneumatische Stellsignalwandler als Proportionalventil, umfassend einen Kolbenschieber mit I/P-Wandler beispielsweise mit einer Prallplatte, zur Ansteuerung realisiert.

Bei dem vorliegenden Beispiel gemäß Figur 1 sind die Pneumatiksteckplätze 11 und 21 als Elektropneumatiksteckplätze ausgeführt, die neben den pneumatischen Schnittstellen auch je wenigstens eine elektrische Schnittstelle 15, 25 aufweisen. Die Pneumatikkomponenten 31, 41, die in den Pneumatiksteckplätzen 11, 21 eingesetzt sind, sind als Elektropneumatikkomponenten ausgeführt und weisen einen elektrischen Anschluss 35 bzw. 45 auf, der dazu ausgelegt ist, in die Steckplatzschnittstelle 15, 25 zur Bildung eines elektrischen Kontakts überzugehen.

Die Steuerungs- und/oder Regelungselektronik 67 kann dazu ausgelegt sein, das Notbetätigungssignal n an die stromabwärtige Pneumatikschnittstelle 21 abzugeben, wenn die Elektronik 67 einen Fehler feststellt, beispielsweise ein Stromschwellenwert des Soll-Stell-Signals w an dem Feldeingang 61 oder an dem Analog-Digital-Wandler 64 oder dergleichen unterschritten wird, oder wenn ein Druck-Messwert m unter einen bestimmten Schwellwert fällt, oder wenn die Elektronik 67 ein anderes Signal empfängt, infolge dessen die Steuerungs- und/oder Regelungselektronik 67 dazu ausgelegt ist, das Notbetätigungssignal n für den zweiten Pneumatiksteckplatz 21 auszugeben.

Es sei klar, dass ein Auf/Zu-Ventil auch als Reinpneumatikkomponente gegebenenfalls an einem Reinpneumatiksteckplatz, ohne elektrischen Anschluss und/oder ohne elektrische Verbindung und/oder ohne elektrische Komponente realisiert sein kann. Beispielsweise kann das Auf/Zu-Ventil bei einem Versorgungsdruck-(Mess-)Eingang 43e haben, der mit einer Versorgungsdruck-(Mess-)Schnittstelle 23e des stromabwärtigen Pneumatiksteckplatzes 21 verbunden ist, wobei der Versorgungsdruck-(Mess-)Eingang 23e des stromabwärtigen Pneumatiksteckplatzes 21 (ohne Umwege bzw. Reihenschaltung mit dem stromaufwärtigen Pneumatiksteckplatz 11) direkt mit dem Versorgungsdruckeingang 53 des Stellungsreglers 1 verbunden ist.

Das Auf/Zu-Ventil kann ein Pneumatikschaltbetätiger 47, wie ein Pilotventil oder dergleichen aufweisen, das veranlassen kann, dass das Auf/Zu-Ventil 41 die geschlossene bzw. offene Stelle abhängig von dem Versorgungsdrucksignal p am Versorgungseingang 53 des Stellungsreglers einnimmt. Beispielsweise kann ein Pneumatikschaltbetätiger 47 des Auf/Zu-Ventils 41 über die Versorgungsdruck-(Mess-) Schnittstelle 23 den Versorgungsdruck p empfangen und bei Unterschreiten eines Versorgungsdruck-Mindestschwellwerts erzwingen, dass das Auf/Zu-Ventil die Schließstellung einnimmt.

Der erfindungsgemäße elektropneumatische Stellungsregler kann neben den wenigstens zwei Pneumatiksteckplätzen 11, 21 wenigstens einen, zwei oder mehr rein elektrische Elektroniksteckplätze 63, 65 aufweisen, die keine Pneumatikschnittstellen aufweisen. Solche Elektroniksteckplätze 63, 65 können im Vergleich zu den Pneumatiksteckplätzen zur Aufnahme gleichartiger oder unterschiedlich geformter Steckkomponenten ausgestaltet sein. Die Elektroniksteckplätze 63, 65 weisen Elektronikschnittstellen 66, 76 auf, die mit entsprechenden elektrischen Schnittstellen von Elektronikkomponenten 68, 78 in Eingriff gebracht werden können, um einen elektrischen Kontakt zwischen den eingesetzten Elektronikkomponenten 68, 78 und den mit den Elektronikkomponenten 68, 78 belegten Elektronikschnittstellen 63, 65 zu bilden. Beispielsweise kann ein Elektroniksteckplatz 63 als Elektronikkomponente 68 ein Stellungsmelder mit Binärein- und/oder -ausgang oder ein Zwangsentlüftungs-Kommunikationsbaustein mit Binärein- und/oder -ausgang eingesetzt sein.

Beispielsweise kann die Elektroniksteckkomponente 68, die den Elektroniksteckplatz 63 belegt, ein elektronischer Zwangsentlüftungs-Kommunikationsbaustein sein, der zumindest einen Binäreingang aufweist. Der Binäreingang kann in Verbindung stehen mit einer Leitwarte oder einem Sensor zur Mitteilung eines Alarm- oder Notzustands an den Stellungsregler 1. Bei Empfang eines Alarm- oder Sperrzustandssignals wird von dem Elektronikbaustein 68 über die elektronische Schnittstelle 66 ein Sperrsignal a an die Steuerungs- und/oder Regelungselektronik 67 gesandt, die das Notstellsignal n an das Auf/Zu-Ventil 41 in dem stromabwärtigsten Pneumatiksteckplatz 21 sendet, um dessen Sperrfunktion zu veranlassen.

Es ist auch denkbar, dass beispielsweise die Elektronikkomponente 78, die den Elektroniksteckplatz 65 belegt, einen Datenspeicher oder eine Logikschaltung umfasst, die ein Steuermodul, beispielsweise als Software-Steuermodul, mit der Steuerungs- und/oder Regelungselektronik 67, insbesondere einem Mikrocontroller, zur Bereitstellung einer Not-Stell-Funktion, die einer Verblockfunktion oder einer Notentlüftungsfunktion mit bereitstellt. Die Elektronikkomponente 78 in dem Elektroniksteckplatz 65 kann mit der Steuerungs- und/oder Regelungselektronik 67 Kommunikationssignale b zumindest unidirektional austauschen.

Der erfindungsgemäße elektropneumatische Stellungsregler 1 kann über einen oder mehrere Drucksensoren 55 verfügen, wobei vorliegend ein Drucksensorblock 55 in Fig. 1 dargestellt ist, der individuelle Drucksensoren umfasst. Der Drucksensorblock 55 weist einen Versorgungsdrucksensor auf, der pneumatisch direkt verbunden ist mit dem pneumatischen Versorgungseingang 53, um das Versorgungsdrucksignal p zu messen. Der Drucksensorblock 55 kann ferner einen Drucksensor für den Druck im Gehäuse 71 aufweisen. Der Drucksensorblock 55 kann alternativ oder zusätzlich einen Drucksensor zum erfassen des Umgebungsdrucks bzw. atmosphärischen Drucks umfassen. Der in Fig. 1 dargestellte Drucksensorblock 55 weist vorzugsweise einen Zwischendrucksensor auf, der den Druck inmitten der pneumatischen Reihenschaltung, zwischen dem stromaufwärtigen Pneumatiksteckplatz 11 und dem stromabwärtigen Pneumatiksteckplatz 21 misst. Der zweite Drucksensor des Drucksensorblocks 55 misst also den Druck des pneumatischen Steuersignals S₁₁, der an dem Pneumatikausgang 13b für den Pneumatikeingang 23a ausgegeben wird. Der Drucksensorblock 55 weist außerdem einen Drucksensor auf, der den Druck des pneumatischen Stelldrucksignals S₅₁ an dem pneumatischen Steuerausgang misst. Der Einfachheit halber ist zwischen dem Drucksensorblock 55 und der Steuerungs- und/oder Regelungselektronik 67 nur eine Druckmesssignalleitung zur Übermittlung des Druckmesswerts m dargestellt. Es sei jedoch klar, dass jeder individuelle Drucksensor eine eigene individuelle Druckmesssignalleitung aufweisen kann, die den jeweiligen Drucksensor mit der Steuerungs- und/oder Regelungselektronik 67 verbindet.

Wenn einer der Pneumatiksteckplätze 11, 21 oder zumindest eine Pneumatikschnittstelle eines Pneumatiksteckplatzes 11, 21 nicht belegt ist, kann dies beispielsweise durch den Mikroprozessor 67 erkannt werden. Dadurch kann insbesondere durch den Mikroprozessor 67 mittels eines entsprechenden Regelsignals oder durch eine selbstständig arbeitende Verschlusseinrichtung 16, 26 die jeweilige pneumatische Eingangs- oder Ausgangsschnittstelle des Pneumatiksteckplatzes 11, 21 geschlossen sein.

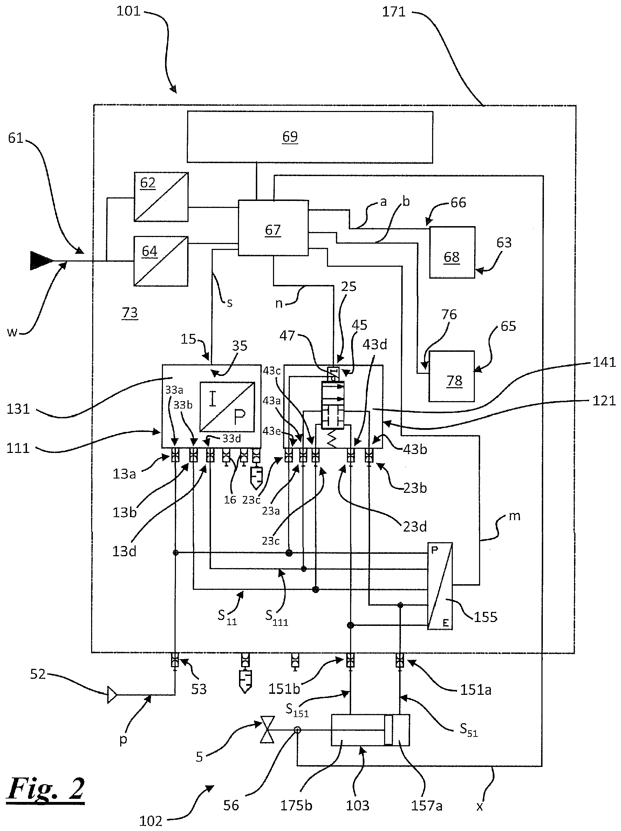

Das in Fig. 2 dargestellte erfindungsgemäße Feldgerät 102 mit einem erfindungsgemäßen Stellungsregler 101 unterscheidet sich von dem in Fig. 1 dargestellten Feldgerät 2 im Wesentlichen dadurch, dass der pneumatische Stellantrieb 103 des in Fig. 2 dargestellten Feldgeräts 102 ein doppeltwirkender pneumatischer Stellantrieb mit zwei pneumatischen Arbeitskammern 157a, 157b ist, also vorzugsweise keine Federrückstellung umfasst. Ferner umfasst der erfmdungsgemäße Stellungsregler 101 gemäß der in Fig. 2 dargestellten Ausführung eine Doppelreihenschaltung mit zwei parallel zueinander vorgesehenen pneumatischen Steuerausgängen 151a, 151b zur Betätigung des doppeltwirkenden pneumatischen Stellantriebs 103. Für dieselben oder ähnlichen Bauteile des Feldgeräts 102 bzw. des Stellungsreglers 101 gemäß Fig. 2 werden zur einfacheren Lesbarkeit der Anmeldung gegenüber Figur 1 dieselben oder ähnliche, um 100 erhöhte, Bezugszeichen verwendet. Der oben beschriebene Aufbau des Feldgeräts 2 bzw. Stellungsreglers 1 und die Funktionsbeschreibung gelten im Wesentlichen gleichermaßen für das Feldgerät 102 bzw. den Stellungsregler 101.

Der doppeltwirkende Stellantrieb 103 weist eine erste pneumatische Arbeitskammer 157a und eine zweite pneumatische Arbeitskammer 157b auf, die vorzugsweise luftdicht durch eine Membran voneinander getrennt sind. Wenn zwischen durch die Membran getrennten pneumatischen Arbeitskammern 157a, 157b eine Steuersignal-Druckdifferenz vorliegt, wirkt eine Stellkraft auf die Membran und die damit verbundene Antriebsstange oder -welle zum Betätigen des Stellventils 5. Jede pneumatische Arbeitskammer 157a, 157b empfängt jeweils ein ihr zugeordnetes pneumatisches Steuerdrucksignal S₅₁ oder S₁₅₁ von einem ihr jeweils zugeordnete Steuerdruckausgang 151a oder 151b des Stellungsreglers 101. Der erste Steuerdruckausgang 151a ist Teil einer ersten pneumatischen Reihenschaltung mit zwei Pneumatiksteckplätzen 111, 121. Hinsichtlich des pneumatischen Steuerausgangs 151 wirkt diese erste pneumatische Reihenschaltung im Wesentlichen wie die oben hinsichtlich des Feldgeräts 2 mit dem Stellungsregler 1 beschriebene Reihenschaltung.

Der zweite pneumatische Stelldruckausgang 151b ist ebenfalls Teil einer pneumatischen Reihenschaltung mit zwei Pneumatiksteckplätzen. Bei der vorliegenden Ausführung sind für den zweiten Steuerdruckausgang 151 dieselben Pneumatiksteckplätze 111, 121 vorgesehen, die auch die Reihenschaltung mit dem ersten pneumatischen Steuerausgang realisieren, wobei die Pneumatiksteckplätze 111, 121 derart ausgestaltet sind, dass die beiden Reihenschaltungen ab dem pneumatischen Eingang 13 des stromaufwärtigen (vorliegend: stromaufwärtigsten) Steckplatzes 111 getrennt parallel voneinander wirken. Eine Interaktion bzw. Wechselwirkung zwischen den Reihenschaltungen erfolgt vorzugsweise nicht.

Die Elektropneumatikkomponente 131 in dem ersten Pneumatiksteckplatz 111 ist derart ausgestaltet, dass ausgehend von einem ersten Pneumatikeingang 33a der Pneumatikkomponente 131 eine Aufteilung, beispielsweise in Form einer T-Kreuzung insbesondere mit Rückstromsperrventilen in zwei voneinander getrennte, parallele pneumatische Leitungen erfolgt. Die Pneumatikkomponente 131 kann zwei parallele I/P-Wandler umfassen, denen jeweils ein individueller pneumatischer Ausgang 33b oder 33d zugeordnet ist, um an einer jeweiligen pneumatischen Schnittstelle 13b oder 13d des Pneumatiksteckplatzes 111 ein pneumatisches Stelldrucksignal S₁₁ oder S₁₁₁ auszugeben.

Bei dem in Fig. 2 dargestellten elektropneumatischen Stellungsregler 101 hat der stromaufwärtige Pneumatiksteckplatz 111 eine Elektronikschnittstelle 155 zum Anschluss einer Elektronikschnittstelle 35 des Elektropneumatikmoduls 131. Über die Schnittstellen 15, 35 des stromaufwärtigen Elektropneumatiksteckplatzes 111 und der ihn belegenden modularen Pneumatikkomponente 131 kann letztere ein oder mehrere elektrische Stellsignale s von der Steuerungs- und/oder Regelungselektronik 67 empfangen. Alternativ können der Elektropneumatiksteckplatz 111 und die darin sitzende Elektropneumatikkomponente 131 weitere (nicht dargestellte) elektronische Schnittstellen für weitere Kommunikationsleitungen zu der Steuerungs- und/oder Regelungselektronik 67 aufweisen, insbesondere um jeden einzelnen I/P-Wandler einzeln anzusteuern.

Der zweite Pneumatiksteckplatz 121 ist mit einem Pneumatikmodul 141 belegt, das ein Auf/Zu-Ventil enthält. Das Auf/Zu-Ventil realisiert zwei parallel pneumatische Verbindungsleitungen mit jeweils einem pneumatischen Eingang 43a, 43c und jeweils einen pneumatischen Ausgang 43b, 43d. Bei der dargestellten Ausführung hat das zweistrahlige Auf/Zu-Ventil des Elektropneumatikmoduls 141 einen Freigabezustand, in dem die beiden parallelen pneumatischen Verbindungen zum Übertragen je eines pneumatischen Stelldrucksignals S₁₁ oder S₅₁ geöffnet sind. Alternativ kann das zweistrahlige Auf/Zu-Ventil der Pneumatikkomponente 141 einen Sperrzustand einnehmen, in dem beide pneumatische Verbindungen geschlossen sind.

Es sei klar, dass ein (nicht näher dargestellter) erfindungsgemäßer elektropneumatischer Stellungsregler beispielsweise unter Verwendung weiterer Pneumatiksteckplätze anders geartete multiple Reihenschaltungen realisieren kann. Beispielsweise könnte ein (nicht näher dargestellter) Stellungsregler mit vier Pneumatiksteckplätzen ausgestattet sein, die jeweils eine Reihenschaltung, wie hinsichtlich Fig. 1 beschrieben, so dass vollständig unterschiedliche Pneumatikkomponenten für einen ersten Steuerdruckausgang 51 und für den zweiten Steuerdruckausgang 151 vorgesehen sind. Gemäß einer anderen, alternativen (nicht näher dargestellten) Anordnung könnte ein elektropneumatischer Doppelstellsignalwandler, entsprechend dem Pneumatikmodul 131, über dessen ersten Pneumatikausgang 33b mit einer ersten Pneumatikkomponente gemäß der oben beschriebenen, mit Bezugsziffer 41 bezeichnet, in Reihe geschaltet sein, und der zweite Pneumatikausgang 33d pneumatisch in Reihe geschaltet sein mit einem zweiten, zusätzlichen Pneumatikmodul, entsprechend dem mit Bezugsziffer 41 versehenen gemäß Fig. 1. Es ist klar, dass eine entsprechende Pneumatikkanalverbindung vorgesehen sein müsste. Es ist auch denkbar, dass ein Stellungsregler zwei einfache elektropneumatische Stellsignalwandler, wie den mit Bezugsziffer 31 versehenen, umfasst, die parallel mit dem Versorgungsdruck p an einem jeweiligen Eingang entsprechend 13a gespeist werden, und die je einen Ausgang 13b haben, wobei der erste dieser Wandler mit einem ersten Eingang und der zweite dieser Wandler mit einem zweiten Eingang eines doppelstrahligen Auf/Zu-Ventils, wie in dem Pneumatikmodul 141 dargestellt, verbunden sein können (nicht näher dargestellt).

Abgesehen von dem zweistrahligen Aufbau funktioniert das Auf/Zu-Ventil 141 im Wesentlichen wie das oben beschriebene einstrahlige Auf/Zu-Ventil der oben beschriebenen Pneumatikkomponente 41. Das zweistrahlige Auf/Zu-Ventil des Elelctropneumatikmoduls 141 ist vorzugsweise als 4/2-Wegeventil realisiert.

Der Drucksensorblock 155 ist ebenfalls entsprechend dem oben beschriebenen Drucksensorblock 55 ausgestaltet, nämlich zum Messen von Druckmesswerten an unterschiedlichen Messpunkten in den Reihenschaltungen. Der Drucksensorblock 155 kann unabhängig voneinander einen ersten Druckmesswert am pneumatischen Versorgungseingang 53 des Stellungsreglers 101, zwei zweite Druckmesswerte in einerseits der ersten und andererseits der zweiten Reihenschaltung, sowie zwei dritte Druckmesswerte einerseits am ersten pneumatischen Steuerausgang 151a und andererseits am zweiten Steuerausgang 151b erfassen. Vorzugsweise sind jeweils einzelne Drucksensoren für jede Messstelle und/oder jeweils einzelne Druckmesswert-Signalleitungen für die Steuerungs- und/oder Regelungselektronik 67 (nicht näher dargestellt) vorgesehen.

Für sämtliche oben beschriebene Stellungsregler 1, 101, etc. gilt, dass die pneumatischen Verbindungskanäle beispielsweise durch eine in dem Stellungsreglergehäuse 71, 171 vorgesehenen Pneumatikkanalplatte oder Pneumatikkanalverrohrung realisiert sein können.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

## Patentansprüche

1. Elektropneumatischer Stellungsregler (1, 101) für einen pneumatischen Stellantrieb (3, 103) zum Betätigen einer Stellarmatur, wie ein Stellventil (5), einer prozesstechnischen Anlage, umfassend:
- wenigstens zwei modulare Pneumatikkomponenten (31, 41, 131, 141), wie ein elektropneumatischer Wandler;
- wenigstens zwei modulare Pneumatiksteckplätze (11, 21, 111, 121) zur Belegung mit jeweils einer modularen Pneumatikkomponente (31, 41, 131, 141), wobei die wenigstens zwei Pneumatiksteckplätze (11, 21, 111, 121) und die Pneumatikkomponenten (31, 41, 131, 141) derart modular aufeinander abgestimmt sind, dass deren pneumatische Schnittstellen (13, 23, 33, 43) bei Belegung eines Pneumatiksteckplatzes (11, 21, 111, 121) ineinander übergehen, und
- wenigstens einen pneumatischen Steuerausgang (51, 151) zum Ausgeben eines pneumatischen Stelldrucksignals (S₁₁, S₅₁, S₁₁₁, S₁₅₁) an den Stellantrieb (3, 103),
**dadurch gekennzeichnet, dass**
die wenigstens zwei modularen Pneumatiksteckplätze (11, 21, 111, 121) und der wenigstens eine pneumatischen Steuerausgang (51, 151) eine pneumatische Reihenschaltung bilden.

2. Elektropneumatischer Stellungsregler (1, 101) nach Anspruch 1, **dadurch gekennzeichnet, dass** ein stromabwärtiger Pneumatiksteckplatz (21, 121) der wenigstens zwei Pneumatiksteckplätze (11, 21, 111, 121) mit einer pneumatischen Schaltvorrichtung, wie ein Auf/Zu-Ventil (41, 141), belegt ist, die entweder einen Freigabezustand einnimmt, in dem sie eine pneumatische Verbindung zum Übertragen des Stelldrucksignals (S₁₁, S₅₁, S₁₁₁, S₁₅₁) zwischen wenigstens einem stromaufwärtigen Pneumatiksteckplatz (11, 111) der wenigstens zwei Pneumatiksteckplätze (11, 21, 111, 121) und dem wenigstens einen pneumatischen Steuerausgang (51, 151) bereitstellt, oder einen Sperrzustand einnimmt, in dem sie die pneumatische Verbindung schließt.

3. Elektropneumatischer Stellungsregler (1, 101) nach Anspruch 2, **dadurch gekennzeichnet, dass** die pneumatische Schaltvorrichtung dazu ausgelegt ist, den Sperrzustand infolge eines Fehlerzustands oder Alarmzustands insbesondere der prozesstechnischen Anlage, eines Feldgeräts (2, 102), des Stellungsreglers (1, 101), des Stellantriebs und/oder der Stellarmatur einzunehmen.

4. Elektropneumatischer Stellungsregler (1, 101) nach Anspruch 2 oder 3, **dadurch gekennzeichnet, dass** die pneumatische Schaltvorrichtung zum Realisieren des Sperrzustands und des Freigabezustands einen druckentlasteten Schieber oder ein Sitzventil aufweist und/oder dass die pneumatische Schaltvorrichtung zum Realisieren des Sperrzustands wenigstens eine weichdichtende Dichtkomponente, wie eine Elastomerdichtung oder eine Thermoplastdichtung, umfasst.

5. Elektropneumatischer Stellungsregler (1, 101) nach einem der Ansprüche 2 bis 4, **dadurch gekennzeichnet, dass** die pneumatische Schaltvorrichtung dazu ausgelegt ist, in dem Freigabezustand die pneumatische Verbindung derart freizugeben, dass in der pneumatischen Schaltvorrichtung ein Verbindungskanal ausreichenden Querschnitts bereitgestellt ist, um das Stelldrucksignal (S₁₁, S₅₁, S₁₁₁, S₁₅₁) ungedrosselt passieren zu lassen, wobei vorzugsweise der Querschnitt nicht mehr als 20%, vorzugsweise 10 %, insbesondere 5%, größer ist als notwendig, um das Stelldrucksignal (S₁₁, S₅₁, S₁₁₁, S₁₅₁) ungedrosselt passieren zu lassen.

6. Elektropneumatischer Stellungsregler (1, 101) nach einem der Ansprüche 2 bis 5, **dadurch gekennzeichnet, dass** der elektropneumatische Stellungsregler dazu ausgelegt ist, die Ist-Stellposition eines Sperrglieds der Schaltvorrichtung mit einem Positionssensor zu erfassen.

7. Elektropneumatischer Stellungsregler (1, 101) nach einem der vorstehenden Ansprüche, **dadurch gekennzeichnet, dass** die pneumatische Reihenschaltung stromaufwärts des wenigstens einen pneumatischen Steuerausgangs (51, 151) nur an einem stromaufwärtigen Pneumatiksteckplatz (11, 111) der wenigstens zwei Pneumatiksteckplätze (11, 21, 111, 121) entlüftbar ist.

8. Elektropneumatischer Stellungsregler (1, 101) nach einem der vorstehenden Ansprüche, **dadurch gekennzeichnet, dass** ein stromaufwärtiger Pneumatiksteckplatz (11, 111) der wenigstens zwei Pneumatiksteckplätze (11, 21, 111, 121) mit einem elektropneumatischen Stellsignalwandler (31, 131) belegt ist, der dazu ausgelegt ist, das pneumatische Stelldrucksignal (S₁₁, S₁₁₁) zum Ansteuern des Stellantriebs (3, 103) abzugeben.

9. Elektropneumatischer Stellungsregler (1, 101) nach einem der vorstehenden Ansprüche, ferner umfassend einen pneumatischen Versorgungseingang (53) zum Bereitstellen eines pneumatischen Versorgungsdrucksignals (p) an die pneumatische Reihenschaltung und/oder wenigstens einen elektrischen Feldeingang (61) zum Empfangen eines Versorgungsstroms und/oder eines elektrischen Stellsignals (w), wie ein digitales Steuersignal, beispielsweise von einem Bussystem, oder ein Steuerstrom, insbesondere ein 4..20mA Stellsignal, vorzugsweise zum Ansteuern eines elektropneumatischen Stellsignalwandlers (31, 131).

10. Elektropneumatischer Stellungsregler (1, 101) nach einem der vorstehenden Ansprüche, ferner umfassend wenigstens einen modularen Elektroniksteckplatz (63, 65) zur Belegung mit jeweils einer modularen Elektronikkomponente (68,78), wie ein Sensor, insbesondere ein binärer Positionssensor, ein vorzugsweise binärer elektronischer Signalein- und/oder -ausgang, wobei der wenigstens eine modulare Elektroniksteckplatz (63, 65) und die Elektronikkomponente (68,78) derart modular aufeinander abgestimmt sind, dass deren elektrische Schnittstellen bei Belegung des Elektroniksteckplatzes (63, 65) ineinander übergehen.

11. Elektropneumatischer Stellungsregler (1, 101) nach einem der vorstehenden Ansprüche, ferner umfassend wenigstens einen Drucksensor (55, 155) zum Erfassen wenigstens eines Ist-Druckwerts in der pneumatischen Reihenschaltung, insbesondere am stromabwärtigen Beginn, inmitten und/oder am stromaufwärtigen Ende der pneumatischen Reihenschaltung, vorzugsweise des Steuerdrucksignals (S₅₁, S₁₅₁) am Steuerausgang (51, 151) der pneumatischen Reihenschaltung und/oder des Stelldrucksignals (S₁₁, S₁₁₁) in der pneumatischen Reihenschaltung zwischen einem stromaufwärtigen Pneumatiksteckplatz (11, 111) und einem stromabwärtigen Pneumatiksteckplatz (31, 131) der wenigstens zwei Pneumatiksteckplätze und/oder gegebenenfalls eines Versorgungsdrucksignals (p) am pneumatischen Versorgungseingang (53) der pneumatischen Reihenschaltung.

12. Elektropneumatischer Stellungsregler (1, 101) nach Anspruch 9 mit einem Gehäuse (71, 171), das den wenigstens einen pneumatischen Steuerausgang (51, 151) aufweist und in dem die Reihenschaltung einschließlich der zwei modularen Pneumatiksteckplätze (11, 111,31, 131) untergebracht ist, wobei gegebenenfalls das Gehäuse (71, 171) den elektrischen Feldeingang (61) und/oder den pneumatischen Versorgungseingang (53) aufweist, wobei insbesondere die modularen Elektroniksteckplätze (63, 65) in dem Gehäuse (71, 171) untergebracht sind.

13. Elektropneumatischer Stellungsregler (1, 101) nach einem der vorstehenden Ansprüche, wobei die Pneumatikkomponenten (31, 41, 131, 141) unterschiedlicher Funktion und/oder Bauart sind.

14. Elektropneumatisches Feldgerät (2, 102), umfassend einen elektropneumatischen Stellungsregler (1, 101) nach einem der vorstehenden Ansprüche, und den mit dem wenigstens einen pneumatischen Steuerausgang (51, 151) verbundenen, insbesondere einfachwirkenden oder doppeltwirkenden, pneumatischen Stellantrieb (3, 103).

15. Elektropneumatisches Feldgerät (2, 102) nach Anspruch 14, **dadurch gekennzeichnet, dass** das pneumatische Feldgerät (2, 102) stromaufwärts des pneumatischen Stellantriebs (3, 103) betriebsgemäß nur an einem stromaufwärtigen Pneumatiksteckplatz (11, 111) entlüftbar ist.

## Claims

1. Electropneumatic positioner (1, 101) for a pneumatic actuator (3, 103) for operating a control device such as a control valve (5) of a processing plant, comprising:
- at least two modular pneumatic components (31, 41, 131, 141), such as an electropneumatic transducer;
- at least two modular pneumatic slots (11, 21, 111, 121) for engaging with a respective modular pneumatic component (31, 41, 131, 141), wherein the at least two pneumatic slots (11, 21, 111, 121) and the pneumatic components (31, 41, 131, 141) are modularly matched to one another such that their pneumatic interfaces (13, 23, 33, 43) merge into one another when a pneumatic slot is engaged, and
- at least one pneumatic control output (51, 151) for outputting a pneumatic control pressure signal (S₁₁, S₅₁, S₁₁₁, S₁₅₁) to the pneumatic actuator (3, 103),
**characterized in that**
the at least two modular pneumatic slots (11, 21, 111, 121) and the at least one pneumatic control output (51,151) form a pneumatic series connection.

2. Electropneumatic positioner (1, 101) according to claim 1, **characterized in that** a downstream pneumatic slot (21, 121) of the at least two pneumatic slots (11, 21, 111, 121) is engaged with a pneumatic switching device, such as an open/close valve (41, 141), which occupies either a release state, in which it provides a pneumatic connection for transmitting the pneumatic control pressure signal (S11, S₅₁, S111, S₁₅₁) between at least one upstream pneumatic slot (11, 111) of the at least two pneumatic slots (11, 21, 111, 121) and the at least one pneumatic control output (51, 151), or occupies a locked state, in which it seals off the pneumatic connection.

3. Electropneumatic positioner (1, 101) according to claim 2, **characterized in that** the pneumatic switching device is designed to occupy the locked state caused by an error state or alarm state in particular of the processing plant, of a field device (2, 102), of the electropneumatic positioner (1, 101), of the actuator and/or of the actuator part.

4. Electropneumatic positioner (1, 101) according to claim 2 or 3, **characterized in that** the pneumatic switching device comprises a pressure relieving slider or a poppet valve for achieving the locked state or the release state and/or **in that** the pneumatic switching device comprises at least one soft-sealing sealing component such as an elastomer seal or a thermoplastic seal for realizing the locked state.

5. Electropneumatic positioner (1, 101) according to one of the claims 2 to 4, **characterized in that** the pneumatic switching device is configured such that in the release state the pneumatic connection is released such that in the pneumatic switching device a connection channel with a sufficient cross section is provided to allow the pneumatic control pressure signal (S11, S₅₁, S₁₁₁, S₁₅₁) to pass unthrottled, wherein the cross section is preferably not more than 20%, preferably 10%, particularly 5% larger than necessary to allow the pneumatic control pressure signal (S11, S₅₁, S₁₁₁, S₁₅₁) to pass unthrottled.

6. Electropneumatic positioner (1, 101) according to one of the claims 2 to 5, **characterized in that** the electropneumatic positioner is designed to detect the actual position of a blocking element of the switching device for example with a position sensor.

7. Electropneumatic positioner (1, 101) according to one of the preceding claims, **characterized in that** the pneumatic series connection upstream of the at least one pneumatic control output (51, 151) is ventable exclusively at an upstream pneumatic slot (11, 111) of the at least two pneumatic slots.

8. Electropneumatic positioner (1, 101) according to one of the preceding claims, **characterized in that** an upstream pneumatic slot (11, 111) of the at least two pneumatic slots (11, 21, 111, 121) is occupied with an electropneumatic signal transducer (31, 131) which is configured to emit the pneumatic control signal (S11, S111) for controlling the actuator (3. 103).

9. Electropneumatic positioner (1, 101) according to one of the preceding claims, further comprising a pneumatic supply input (53) for providing a pneumatic supply pressure signal (p) to the pneumatic series connection and/or at least one electric field input (61) for receiving a supply current and/or an electric positioning signal (w) such as a digital control signal, for example from a bus system, or a control current, in particular a 4..20mA positioning signal, in particular for controlling an electropneumatic signal transducer (31, 131).

10. Electropneumatic positioner (1, 101) according to one of the preceding claims, further comprising at least one modular electronics slot (63, 65) for engaging with a respective modular electronic component (68, 78),such as a sensor, in particular a binary position sensor, a preferably binary electronic signal input and/or output, wherein the at least one modular electronics slot (63, 65) and the electronic component (68, 78) are modularly matched to one another such that their electronic interfaces merge into one another when the electronic slot (63, 65) is occupied.

11. Electropneumatic positioner (1, 101) according to one of the preceding claims, further comprising at least a pressure sensor (55, 155) for detecting at least one actual pressure value in the pneumatic series connection, particularly at the downstream beginning, in the middle, and/or at the upstream end of the pneumatic series connection, preferably of the pneumatic control pressure signal (S51, S151) at the control output (51, 151) of the pneumatic series connection, and/or of the pneumatic control pressure signal (S11, S111) in the pneumatic series connection between an upstream pneumatic slot (11, 111) and a downstream pneumatic slot (31, 131) of the at least two pneumatic slots, and/or possibly a supply pressure signal (p) at the pneumatic supply input (53) of the pneumatic series connection.

12. Electropneumatic positioner (1, 101) according to claim 9, comprising a housing (71, 171) which comprises the at least one pneumatic control output (51, 151), and in which the series connection including the two modular pneumatic slots (11, 111, 31, 131) is accommodated, wherein the housing (71, 171) possibly comprises the electrical field input (61) and/or the pneumatic supply input (53), wherein in particular the modular electronic slots (63, 65) are accommodated in the housing (71, 171).

13. Electropneumatic positioner (1, 101) according to one of the preceding claims, wherein the pneumatic components (31, 41, 131, 141) are of different functionality and/or design.

14. Electropneumatic field device (2, 102), comprising an electropneumatic positioner (1, 101) according to one of the preceding claims, and the particularly single-acting or double-acting pneumatic actuator (3, 103) connected to the at least one control output (51, 151).

15. Electropneumatic field device (2, 102) according to claim 14, **characterized in that** the pneumatic field device (2, 102) upstream from the pneumatic actuator (3, 103) is operationally ventable exclusively at an upstream pneumatic slot (11, 111).

## Revendications

1. Régulateur de position électropneumatique (1, 101) pour un actionneur pneumatique (3, 103) destiné à commander une vanne de réglage, telle qu'une soupape de réglage (5), d'une installation industrielle, comportant :
- au moins deux composants pneumatiques modulaires (31, 41, 131, 141), telles qu'un convertisseur électropneumatique ;
- au moins deux emplacements pneumatiques modulaires (11, 21, 111, 121) destinés à recevoir respectivement un composant pneumatique modulaire (31, 41, 131, 141), les au moins deux emplacements pneumatiques modulaires (11, 21, 111, 121) et les composants pneumatiques modulaires (31, 41, 131, 141) étant adaptés l'un à l'autre de façon modulaire, de telle façon que leurs interfaces pneumatiques (13, 23, 33, 43) se confondent lorsqu'un emplacement pneumatique modulaire (11, 21, 111, 121) est occupé, et
- au moins une sortie de commande pneumatique (51, 151) pour l'envoi d'un signal de pression de réglage pneumatique (S₁₁, S₅₁, S₁₁₁, S₁₅₁) à l'actionneur (3, 103),
**caractérisé en ce que**
les au moins deux emplacements pneumatiques modulaires (11, 21, 111, 121) et l'au moins une sortie de commande pneumatique (51, 151) forment un montage en série pneumatique.

2. Régulateur de position électropneumatique (1, 101) selon la revendication 1, **caractérisé en ce qu'**un emplacement pneumatique aval (21, 121) parmi les au moins deux emplacements pneumatiques (11, 21, 111, 121) est équipé d'un dispositif de commutation pneumatique, tel qu'une soupape ouvert/fermé (41, 141), laquelle peut prendre un état de libération dans lequel elle fournit une liaison pneumatique pour la transmission du signal de pression de réglage (S₁₁, S₅₁, S₁₁₁ S₁₅₁) entre au moins un emplacement pneumatique amont (11, 111) parmi les au moins deux emplacements pneumatiques modulaires (11, 21, 111, 121) et l'au moins une sortie de commande pneumatique (51, 151), ou un état de blocage, dans lequel elle ferme la liaison pneumatique.

3. Régulateur de position électropneumatique (1, 101) selon la revendication 2, **caractérisé en ce que** le dispositif de commutation pneumatique est conçu pour prendre l'état de blocage suite à un état de défaut ou d'un état d'alarme en particulier de l'installation industrielle, d'un appareil de terrain (2, 102), du régulateur de position électropneumatique (1, 101), de l'actionneur et/ou de la vanne de réglage.

4. Régulateur de position électropneumatique (1, 101) selon la revendication 2 ou 3, **caractérisé en ce que** le dispositif de commutation pneumatique présente un poussoir déchargé en pression ou une soupape à siège pour la réalisation de l'état de blocage et de l'état de libération, et/ou **en ce que** le dispositif de commutation pneumatique comporte au moins un composant d'étanchéité souple, tel qu'un composant d'étanchéité élastomère ou un composant d'étanchéité thermoplastique, pour la réalisation de l'état de blocage.

5. Régulateur de position électropneumatique (1, 101) selon l'une des revendications 2 à 4, **caractérisé en ce que** le dispositif de commutation pneumatique est conçu pour libérer la liaison pneumatique dans l'état de libération de manière à fournir un canal de liaison à section transversale suffisante dans le dispositif de commutation pneumatique pour laisser passer le signal de pression de réglage (S₁₁, S₅₁, S₁₁₁, S₁₅₁) sans étranglement, la section transversale n'étant pas plus de 20 %, de préférence pas plus de 10 %, en particulier pas plus de 5 % plus grande que nécessaire pour de laisser passer le signal de pression de réglage (S₁₁, S₅₁, S₁₁₁, S₁₅₁) sans étranglement.

6. Régulateur de position électropneumatique (1, 101) selon l'une des revendications 2 à 5, **caractérisé en ce que** le régulateur de position électropneumatique est conçu pour détecter la position de réglage réelle d'un organe de blocage du dispositif de commutation avec un capteur de position.

7. Régulateur de position électropneumatique (1, 101) selon l'une des revendications précédentes, **caractérisé en ce qu'**en amont de l'au moins une sortie de commande pneumatique (51, 151), le montage en série pneumatique ne peut être purgé qu'au niveau d'un emplacement pneumatique amont (11, 111) parmi les au moins deux emplacements pneumatiques (11, 21, 111, 121).

8. Régulateur de position électropneumatique (1, 101) selon l'une des revendications précédentes, **caractérisé en ce qu'**un emplacement pneumatique amont (11, 111) parmi les au moins deux emplacements pneumatiques (11, 21, 111, 121) est équipé d'un convertisseur de signal de réglage électropneumatique (31, 131), lequel est conçu pour délivrer le signal de pression de réglage (S₁₁, S₁₁₁) pour la commande de l'actionneur (3, 103).

9. Régulateur de position électropneumatique (1, 101) selon l'une des revendications précédentes, comportant en outre une entrée d'alimentation pneumatique (53) permettant de fournir un signal de pression d'alimentation pneumatique (p) au montage en série pneumatique et/ou au moins une entrée de champ électrique (61) pour la réception d'un courant d'alimentation et/ou un signal de réglage électrique (w), tel qu'un signal de commande numérique, par exemple d'un système de bus, ou un courant de commande, en particulier un signal de réglage de 4-20mA, de préférence pour la commande d'un convertisseur de signal de réglage électropneumatique (31, 131) .

10. Régulateur de position électropneumatique (1, 101) selon l'une des revendications précédentes, comportant en outre au moins un emplacement électronique modulaire (63, 65) destiné à recevoir respectivement un composant électronique modulaire (68, 78), tel qu'un capteur, en particulier un capteur de position binaire, une entrée et/ou une sortie de signal électronique de préférence binaire, où l'au moins un emplacement électronique modulaire (63, 65) et le composant électronique (68, 78) sont adaptés l'un à l'autre de façon modulaire de telle façon que leurs interfaces électriques se confondent lorsque l'emplacement électronique (63, 65) est occupé.

11. Régulateur de position électropneumatique (1, 101) selon l'une des revendications précédentes, comportant en outre au moins un capteur de pression (55, 155) destiné à détecter au moins une valeur de pression réelle dans le montage en série pneumatique, en particulier à l'extrémité aval, au milieu et/ou à l'extrémité amont du montage en série pneumatique, de préférence du signal de pression de réglage (S₅₁, S₁₅₁) au niveau de la sortie de commande (51, 151) du montage en série pneumatique et/ou du signal de pression de réglage (S₁₁, S₁₁₁) dans le montage en série pneumatique entre un emplacement pneumatique amont (11, 111) et un emplacement pneumatique aval (31, 131) parmi les au moins deux emplacements pneumatiques et/ou le cas échéant d'un signal de pression d'alimentation (p) au niveau de l'entrée d'alimentation pneumatique (53) du montage en série pneumatique.

12. Régulateur de position électropneumatique (1, 101) selon la revendication 9, comprenant un boîtier (71, 171) présentant l'au moins une sortie de commande pneumatique (51, 151) et dans lequel est logé le montage en série pneumatique, y compris les deux emplacements pneumatiques (11, 111, 31, 131), dans lequel le boîtier (71, 171) présente le cas échéant l'entrée de champ électrique (61) et/ou l'entrée d'alimentation pneumatique (53), les emplacements électroniques modulaires (63, 65) étant en particulier logés dans le boîtier (71, 171).

13. Régulateur de position électropneumatique (1, 101) selon l'une des revendications précédentes, dans lequel les composants pneumatiques (31, 41, 131, 141) présentent des fonctions et/ou des constructions différentes.

14. Appareil de terrain électropneumatique (2, 102) comportant un régulateur de position électropneumatique (1, 101) selon l'une des revendications précédentes, ainsi que l'actionneur pneumatique (3, 103), en particulier à action simple ou à action double, relié à l'au moins une sortie de commande pneumatique (51, 151).

15. Appareil de terrain électropneumatique (2, 102) selon la revendication 14, **caractérisé en ce qu'**en amont de l'actionneur pneumatique (3, 103), l'appareil de terrain électropneumatique (2, 102) ne peut être purgé qu'au niveau d'un emplacement pneumatique amont (11, 111).
